# EUROPEAN PATENT APPLICATION

(11) **EP 4 528 494 A1**
(43) Date of publication of application: **26.03.2025**
(21) Application number: 23826274.5
(22) Date of filing: 15.06.2023
(51) Int. Cl.: G06F 9/445

(54) **METHOD AND APPARATUS FOR RUNNING PROGRAM**

(30) Priority: 25.06.2022 CN 202210731665; 13.09.2022 CN 202211118557
(71) Applicant: Huawei Technologies Co., Ltd., Shenzhen, Guangdong 518129 (CN)
(72) Inventor: XU, Zhonghu, Shenzhen, Guangdong 518129 (CN); WANG, Shuqian, Shenzhen, Guangdong 518129 (CN); XU, Jianrong, Shenzhen, Guangdong 518129 (CN)
(74) Representative: Körber, Martin Hans
(86) International application number: PCT/CN2023/100498
(87) International publication number: WO 2023/246625

(57) **Abstract**

A method and an apparatus for running a program are provided, to resolve an existing problem that because a processing device configures a computing resource as a default configuration parameter, running a plurality of different types of programs by the computing resource by using the default configuration parameter is not applicable to running characteristics of various types of programs. In this application, the method may be performed by a processing device or a computing resource in the processing device. Specifically, when it is determined that a program that is being run in the computing resource includes a plurality of similar subprograms, a running characteristic of a subprogram that is run or is run currently in the plurality of similar subprograms is obtained, where the plurality of similar subprograms are a plurality of subprograms whose similarity of running characteristics is greater than or equal to a first preset value. A configuration parameter of the computing resource is determined based on the running characteristic, and then the computing resource is configured by using the configuration parameter of the computing resource.

## Description

### CROSS-REFERENCE TO RELATED APPLICATIONS

This application claims priority to Chinese Patent Application No. 202210731665.4, filed with the China National Intellectual Property Administration on June 25, 2022 and entitled "METHOD FOR EXECUTING PROGRAM", which is incorporated herein by reference in its entirety. This application claims priority to Chinese Patent Application No. 202211118557.6, filed with the China National Intellectual Property Administration on September 13, 2022 and entitled "METHOD AND APPARATUS FOR RUNNING PROGRAM", which is incorporated herein by reference in its entirety.

### TECHNICAL FIELD

This application relates to the field of computer technologies, and in particular, to a method and an apparatus for running a program.

### BACKGROUND

A processing device includes a computing resource. The computing resource may be used for running a plurality of different types of programs. The computing resource is, for example, a central processing unit (central processing unit, CPU) or a core in the CPU. To achieve universality of the computing resource in the processing device, the processing device may configure the computing resource as a default configuration parameter. For example, the computing resource is the CPU. In a design and manufacturing phase, a CPU vendor may set different configuration parameters for the CPU, and then test the CPU in a case of different configuration parameters, to select an optimal configuration parameter as the default configuration parameter of the CPU. In this way, it is ensured that the default configuration parameter of the CPU can be used by the CPU to smoothly run various different types of programs.

However, running the plurality of different types of programs by the computing resource in the processing device by using the default configuration parameter is not applicable to running characteristics of various types of programs. That is, a computing capability of the computing resource cannot be maximized.

### SUMMARY

This application provides a method and an apparatus for running a program, to identify a running characteristic of a subprogram in a program that is being run in a computing resource, and adjust a configuration parameter of the computing resource based on the identified running characteristic. This helps improve execution efficiency of running the program in the computing resource and maximize a computing capability of the computing resource.

According to a first aspect, this application provides a method for running a program. The method may be performed by a processing device, or may be performed by a computing resource in a processing device. The computing resource may be specifically a processor in the processing device or a core of a processor in the processing device. The method includes: when determining that the program that is being run in the computing resource in the processing device includes a plurality of similar subprograms, obtaining a running characteristic of a subprogram that is run or is run currently in the plurality of similar subprograms, where the plurality of similar subprograms are a plurality of subprograms whose similarity of running characteristics is greater than or equal to a first preset value; and determining a configuration parameter of the computing resource based on the running characteristic, and then configuring the computing resource by using the determined configuration parameter.

In the foregoing technical solution, when determining that the program that is being run in the computing resource includes a plurality of similar subprograms, the configuration parameter of the computing resource may be determined based on the running characteristic of the subprogram that is run or is run currently, and the configuration parameter of the computing resource is configured in the computing resource, so that execution efficiency is improved when the computing resource executes another similar subprogram in the program, to improve execution efficiency of the entire program.

In a possible implementation, the plurality of similar subprograms are a loop program that is in the program and that is executed for a plurality of times, and each subprogram corresponds to one or more loops of the loop program. In the foregoing technical solution, it is identified that the loop program exists in the program that is being run in the computing resource, and the configuration parameter of the computing resource for running the loop program is determined based on the running characteristic of the loop program in one or more loops. This helps the computing resource execute the loop program more efficiently.

In a possible implementation, a quantity of instructions of the loop program is greater than a second preset value. In this way, parameters of the computing resource are not frequently configured, and computing overheads (costs or overheads) are reduced.

In a possible implementation, the determining that the program that is being run in the computing resource includes a plurality of similar subprograms may be specifically: when a quantity of times that a first subprogram in the program is repeatedly executed is greater than a third preset value, determining the first subprogram as the loop program. In this way, a manner of determining that the program includes the loop program is provided, to improve accuracy of identifying the loop program.

In a possible implementation, after execution of the first subprogram is completed and a conditional jump instruction is executed, it is determined whether record information of the conditional jump instruction exists. If determining that the record information of the conditional jump instruction exists, it is determined, based on the record information of the conditional jump instruction, whether the quantity of times that the first subprogram is repeatedly executed is greater than the third preset value; or if determining that the record information of the conditional jump instruction does not exist, the record information of the conditional jump instruction is added. In the foregoing technical solution, the conditional jump instruction is executed after the execution of the first subprogram is completed, and whether the first subprogram is the loop program is determined based on the record information of the conditional jump instruction. This helps improve the accuracy of identifying the loop program.

In a possible implementation, after the conditional jump instruction is executed, it is first determined whether the conditional jump instruction points to a small loop, where the small loop refers to a loop in which a quantity of instructions executed in a single loop is less than the second preset value. If the conditional jump instruction points to the small loop, the conditional jump instruction is filtered out; or if the conditional jump instruction does not point to the small loop, it is further determined whether the record information of the conditional jump instruction exists.

In a possible implementation, the record information is recorded in a preset cache (buffer) of the computing resource. In this way, the record information can be quickly read from the cache, and a speed of identifying the loop program is improved.

In a possible implementation, the determining whether the record information of the conditional jump instruction exists may be specifically: determining a jump identifier based on identification information of the conditional jump instruction, where the jump identifier is the identification information of the conditional jump instruction, or a hash of the identification information of the conditional jump instruction; and traversing a plurality of pieces of record information in the cache, and if determining that a piece of record information includes the jump identifier, determining that the cache includes the record information of the conditional jump instruction; or if determining that none of the plurality of pieces of record information in the cache includes the jump identifier, determining that the cache does not include the record information of the conditional jump instruction.

In a possible implementation, the identification information of the conditional jump instruction is obtained from a branch recording module. The identification information includes a start position and/or a target position, or includes a hash of a start position and/or a target position.

In a possible implementation, the determining, based on the record information, whether the quantity of times that the first subprogram is repeatedly executed is greater than the third preset value may be specifically: determining, based on a quantity of instructions and an execution length in the record information, whether the quantity of times that the first subprogram is repeatedly executed is greater than the third preset value, where the quantity of instructions in the record information indicates an accumulative quantity of instructions executed by the program during last execution of the conditional jump instruction; and the execution length in the record information is a difference between accumulative quantities of instructions executed by the program during first two times of execution of the conditional jump instruction respectively.

In the foregoing technical solution, whether the first subprogram is the loop program is determined based on the quantity of instructions and the execution length in the record information of the conditional jump instruction. This helps improve the accuracy of identifying the loop program.

In a possible implementation, the third preset value is equal to 2. The determining, based on a quantity of instructions and an execution length in the record information, whether the quantity of times that the first subprogram is repeatedly executed is greater than the third preset value may be specifically: using the quantity of instructions executed by the program when the conditional jump instruction is executed as a first quantity of instructions; using a difference between the first quantity of instructions and the quantity of instructions in the record information as a first execution length; and if the execution length in the record information is not 0, and a difference between the first execution length and the execution length in the record information is less than a difference threshold, determining that the quantity of times that the first subprogram is repeatedly executed is greater than 2. The foregoing technical solution helps improve the accuracy of identifying the loop program.

In a possible implementation, after the determining that the quantity of times that the first subprogram is repeatedly executed is greater than the third preset value, the method further includes: updating the record information based on the first quantity of instructions and the first execution length.

In a possible implementation, after the first subprogram is determined as the loop program, an instruction quantity threshold is further determined based on an updated first quantity of instructions and a preset execution length in the record information. For example, a sum of the first quantity of instructions and the preset execution length is used as the instruction quantity threshold, where the preset execution length is an execution length that is preset, the first execution length, or the execution length in the record information before the update. When the quantity of instructions executed by the program reaches the instruction quantity threshold, if the conditional jump instruction is not executed again, it is determined that the loop program has exited; and the configuration parameter of the computing resource is determined as a default configuration parameter. In this way, whether the program exits the loop can be accurately identified, to adjust the configuration parameter of the computing resource to the default configuration parameter in time.

In a possible implementation, the determining, based on the record information, whether the quantity of times that the first subprogram is repeatedly executed is greater than the third preset value may further be specifically: determining, based on a quantity of times that the conditional jump instruction in the record information is executed, whether the quantity of times that the conditional jump instruction is executed is greater than the third preset value. In a possible implementation, the determining, based on the record information, whether the quantity of times that the first subprogram is repeatedly executed is greater than the third preset value may be specifically: first updating the quantity of times that the conditional jump instruction in the record information is executed; and determining, based on an updated quantity of times that the conditional jump instruction is executed, whether the quantity of times that the first subprogram is repeatedly executed is greater than the third preset value. Specifically, when the updated quantity of times that the conditional jump instruction is executed is greater than the third preset value, it is determined whether the quantity of times that the first subprogram is repeatedly executed is greater than the third preset value.

In a possible implementation, determining a running characteristic of a loop in which the first subprogram is run in the computing resource may be specifically: obtaining a running characteristic of the program that is being run in the computing resource when the program executes the conditional jump instruction; obtaining a running characteristic of the program that is being run in the computing resource when the program executes the conditional jump instruction once before the program executes the conditional jump instruction currently; and determining, based on the running characteristics obtained twice, the running characteristic of the loop in which the first subprogram is run in the computing resource. The running characteristic is determined based on a characteristic count value obtained from a characteristic counter of a performance monitoring unit.

In a possible implementation, the determining a configuration parameter of the computing resource based on the running characteristic may be specifically: determining, from a plurality of preset characteristics based on the running characteristic, a target preset characteristic that matches the running characteristic; and determining, as the configuration parameter of the computing resource, a preset configuration parameter corresponding to the target preset characteristic. For example, the configuration parameter of the computing resource includes a prefetch policy, and the prefetch policy includes a prefetch policy of a missing cache line, a prefetch policy of integer data access, a radical degree of a prefetch algorithm, and the like. In the foregoing technical solution, after the running characteristic of the subprogram that is run or is being run is determined, a configuration parameter corresponding to the running characteristic of the subprogram is obtained, to obtain a configuration parameter of a computing resource applicable to a running characteristic of a subprogram that needs to be run in the future. This helps improve the execution efficiency of the program.

In a possible implementation, the determining, from a plurality of preset characteristics, a target preset characteristic that matches the running characteristic may be specifically: performing dimension reduction processing on an A-dimensional running characteristic, to obtain a B-dimensional running characteristic; and selecting, from a plurality of B-dimensional preset characteristics, a preset characteristic with a highest matching degree as the target preset characteristic based on matching degrees between the B-dimensional running characteristic and the plurality of B-dimensional preset characteristics, where both A and B are positive integers, and B is less than A.

In a possible implementation, determining a matching degree between the B-dimensional running characteristic and any B-dimensional preset characteristic may be specifically: determining, for any one of B-dimensional dimensions, a matching degree between a running characteristic and a preset characteristic that correspond to the dimension; and determining, based on a matching degree corresponding to each of the B-dimensional dimensions, a matching degree between the B-dimensional running characteristic and a B-dimensional preset characteristic. In a possible implementation, in a dimension of the B-dimensional preset characteristic, the dimension includes a plurality of bits, and values of some bits in the plurality of bits are masked by using a mask. The matching degree between the running characteristic and the preset characteristic that correspond to the dimension may be determined in a fuzzy matching manner for the dimension.

In a possible implementation, if the target preset characteristic that matches the running characteristic is not determined from the plurality of preset characteristics, the default configuration parameter is used as the configuration parameter of the computing resource.

In a possible implementation, the configuration parameter of the computing resource includes a configuration register address and a configuration register value in the computing resource. That the configuration parameter of the computing resource is configured in the computing resource may be specifically: writing the configuration register value to a configuration register corresponding to the configuration register address. In this way, parameter configuration flexibility is improved.

In a possible implementation, the running characteristic includes at least any one or more of the following: a quantity of instructions executed by a processor core in each clock cycle, a loss rate of an instruction translation lookaside buffer, a cache loss rate, and a prefetch hit rate.

According to a second aspect, this application provides an apparatus for running a program. The apparatus for running the program may be a processing device, or may be a computing resource in a processing device. The computing resource may be specifically a processor in the processing device or a core of a processor in the processing device.

The apparatus for running the program includes a parameter determining module and a configuration module.

The parameter determining module is configured to: when determining that the program that is being run in the computing resource in the processing device includes a plurality of similar subprograms, obtain a running characteristic of a subprogram that is run or is run currently in the plurality of similar subprograms, where the plurality of similar subprograms are a plurality of subprograms whose similarity of running characteristics is greater than or equal to a first preset value; and determine a configuration parameter of the computing resource based on the running characteristic.

The configuration module is configured to configure the computing resource by using the determined configuration parameter.

In a possible implementation, the plurality of similar subprograms are a loop program that is in the program and that is executed for a plurality of times, and each subprogram corresponds to one or more loops of the loop program.

In a possible implementation, a quantity of instructions of the loop program is greater than a second preset value.

In a possible implementation, the apparatus further includes a detection module, where the detection module is configured to determine that the program that is being run in the computing resource includes the plurality of similar subprograms. Specifically, when determining that a quantity of times that a first subprogram in the program is repeatedly executed is greater than a third preset value, the detection module determines the first subprogram as the loop program.

In a possible implementation, when determining whether the quantity of times that the first subprogram in the program is repeatedly executed is greater than the third preset value, the detection module is specifically configured to: after execution of the first subprogram is completed and a conditional jump instruction is executed, determine whether record information of the conditional jump instruction exists; and if determining that the record information of the conditional jump instruction exists, determine, based on the record information of the conditional jump instruction, whether the quantity of times that the first subprogram is repeatedly executed is greater than the third preset value; or if determining that the record information of the conditional jump instruction does not exist, add the record information of the conditional jump instruction.

In a possible implementation, after obtaining the conditional jump instruction, the detection module is further configured to determine whether the conditional jump instruction points to a small loop, where the small loop refers to a loop in which a quantity of instructions executed in a single loop is less than the second preset value. If the conditional jump instruction points to the small loop, the conditional jump instruction is filtered out; or if the conditional jump instruction does not point to the small loop, it is further determined whether the record information of the conditional jump instruction exists.

In a possible implementation, the record information is recorded in a preset of cache of the computing resource.

In a possible implementation, when determining whether the record information of the conditional jump instruction exists, the detection module is specifically configured to: determine a jump identifier based on identification information of the conditional jump instruction, where the jump identifier is the identification information of the conditional jump instruction, or a hash of the identification information of the conditional jump instruction; and traverse a plurality of pieces of record information in the cache, and if determining that a piece of record information includes the jump identifier, determine that the cache includes the record information of the conditional jump instruction; or if determining that none of the plurality of pieces of record information in the cache includes the jump identifier, determine that the cache does not include the record information of the conditional jump instruction. In a possible implementation, the identification information of the conditional jump instruction is obtained from a branch recording module. The identification information includes a start position and/or a target position, or includes a hash of a start position and/or a target position.

In a possible implementation, when determining, based on the record information, whether the quantity of times that the first subprogram is repeatedly executed is greater than the third preset value, the detection module is specifically configured to determine, based on a quantity of instructions and an execution length in the record information, whether the quantity of times that the first subprogram is repeatedly executed is greater than the third preset value, where the quantity of instructions in the record information indicates an accumulative quantity of instructions executed by the program during last execution of the conditional jump instruction; and the execution length in the record information is a difference between accumulative quantities of instructions executed by the program during first two times of execution of the conditional jump instruction respectively.

In a possible implementation, the third preset value is equal to 2. When determining, based on the quantity of instructions and the execution length in the record information, that the quantity of times that the first subprogram is repeatedly executed is greater than the third preset value, the detection module is specifically configured to: use the quantity of instructions executed by the program when the conditional jump instruction is executed as a first quantity of instructions; use a difference between the first quantity of instructions and the quantity of instructions in the record information as a first execution length; and if determining that the execution length in the record information is not 0, and a difference between the first execution length and the execution length in the record information is less than a difference threshold, determine that the quantity of times that the first subprogram is repeatedly executed is greater than 2. In a possible implementation, after determining that the quantity of times that the first subprogram is repeatedly executed is greater than the third preset value, the detection module is further configured to update the record information based on the first quantity of instructions and the first execution length.

In a possible implementation, after determining the first subprogram as the loop program, the detection module is further configured to: determine an instruction quantity threshold based on an updated first quantity of instructions and a preset execution length in the record information; and when the quantity of instructions executed by the program reaches the instruction quantity threshold, if the conditional jump instruction is not executed again, determine that the loop program has exited; and the parameter determining module is further configured to determine the configuration parameter of the computing resource as a default configuration parameter.

In a possible implementation, when determining, based on the record information, whether the quantity of times that the first subprogram is repeatedly executed is greater than the third preset value, the detection module is specifically configured to: determine, based on a quantity of times that the conditional jump instruction in the record information is executed, whether the quantity of times that the conditional jump instruction is executed is greater than the third preset value; and when determining that the quantity of times that the conditional jump instruction is executed is greater than the third preset value, determine that the quantity of times that the first subprogram is repeatedly executed is greater than the third preset value.

In a possible implementation, when determining, based on the record information, whether the quantity of times that the first subprogram is repeatedly executed is greater than the third preset value, the detection module is specifically configured to: update the quantity of times that the conditional jump instruction in the record information is executed; and determine, based on an updated quantity of times that the conditional jump instruction is executed, whether the quantity of times that the conditional jump instruction is executed is greater than the third preset value.

In a possible implementation, when determining a running characteristic of a loop in which the first subprogram is run in the computing resource, the parameter determining module is specifically configured to: obtain a running characteristic of the program that is being run in the computing resource when the program executes the conditional jump instruction; obtain a running characteristic of the program that is being run in the computing resource when the program executes the conditional jump instruction once before the program executes the conditional jump instruction currently; and determine, based on the running characteristics obtained twice, the running characteristic of the loop in which the first subprogram is run in the computing resource. The running characteristic is determined by the parameter determining module based on a characteristic count value obtained from a characteristic counter of a performance monitoring unit.

In a possible implementation, when determining the configuration parameter of the computing resource based on the running characteristic, the parameter determining module is specifically configured to: determine, from a plurality of preset characteristics, a target preset characteristic that matches the running characteristic; and determine, as the configuration parameter of the computing resource, a preset configuration parameter corresponding to the target preset characteristic. For example, the configuration parameter of the computing resource includes a prefetch policy, and the prefetch policy includes a prefetch policy of a missing cache line, a prefetch policy of integer data access, a radical degree of a prefetch algorithm, and the like.

In a possible implementation, when determining, from the plurality of preset characteristics, the target preset characteristic that matches the running characteristic, the parameter determining module is specifically configured to: perform dimension reduction processing on an A-dimensional running characteristic, to obtain a B-dimensional running characteristic; and select, from a plurality of B-dimensional preset characteristics, a preset characteristic with a highest matching degree as the target preset characteristic based on matching degrees between the B-dimensional running characteristic and the plurality of B-dimensional preset characteristics, where both A and B are positive integers, and B is less than A.

In a possible implementation, when determining a matching degree between the B-dimensional running characteristic and any B-dimensional preset characteristic, the parameter determining module is specifically configured to: for any one of B-dimensional dimensions, determine a matching degree between a running characteristic and a preset characteristic that correspond to the dimension; and determine, based on a matching degree corresponding to each of the B-dimensional dimensions, a matching degree between the B-dimensional running characteristic and a B-dimensional preset characteristic. In a possible implementation, in a dimension of the B-dimensional preset characteristic, the dimension includes a plurality of bits, and values of some bits in the plurality of bits are masked by using a mask. When determining, for the dimension, the matching degree between the running characteristic and the preset characteristic that correspond to the dimension, the parameter determining module may determine the matching degree in a fuzzy matching manner.

In a possible implementation, if the parameter determining module does not determine, from the plurality of preset characteristics, the target preset characteristic that matches the running characteristic, the default configuration parameter is used as the configuration parameter of the computing resource.

In a possible implementation, the configuration parameter of the computing resource includes a configuration register address and a configuration register value in the computing resource; and when configuring the configuration parameter of the computing resource in the computing resource, the configuration module is specifically configured to write the configuration register value to a configuration register corresponding to the configuration register address.

In a possible implementation, the running characteristic includes at least any one or more of the following: a quantity of instructions executed by a processor core in each clock cycle, a loss rate of an instruction translation lookaside buffer, a cache loss rate, and a prefetch hit rate.

According to a third aspect, this application provides a processing device, including a computing resource and a storage device connected to the computing resource. The storage device is configured to store a computer program, and the computing resource is for executing the computer program stored in the storage device, so that the computing resource implements the method according to any one of the first aspect or the possible implementations of the first aspect.

According to a fourth aspect, this application provides a computer-readable storage medium. The computer-readable storage medium stores a computer program or instructions, and when the computer program or the instructions are run in a computing resource in a processing device, the method according to any one of the first aspect or the possible implementations of the first aspect is implemented.

According to a fifth aspect, this application provides a processing chip, including at least one processor core and an interface. The interface is used for providing program instructions or data for the at least one processor core; and the at least one processor core is configured to execute the program instructions, to implement the method performed by the computing resource according to any one of the first aspect or the possible implementations of the first aspect.

For technical effects that can be achieved in any one of the second aspect to the fifth aspect, refer to descriptions of beneficial effects in the first aspect. Details are not described herein again.

### BRIEF DESCRIPTION OF DRAWINGS

FIG. 1 is a diagram of a structure of a processing device;
FIG. 2 is a diagram of an internal structure of a CPU core;
FIG. 3 is a schematic flowchart of a method for running a program according to this application;
FIG. 4 is a schematic flowchart of determining a loop program according to this application;
FIG. 5 is a schematic flowchart of a specific implementation of determining a loop program according to this application;
FIG. 6 is a schematic flowchart of another specific implementation of determining a loop program according to this application;
FIG. 7 is a diagram of a correspondence between a preset characteristic and a preset configuration parameter according to this application; and
FIG. 8 is a diagram of a structure of an apparatus for running a program according to this application.

### DESCRIPTION OF EMBODIMENTS

The following describes in detail embodiments of this application with reference to the accompanying drawings.

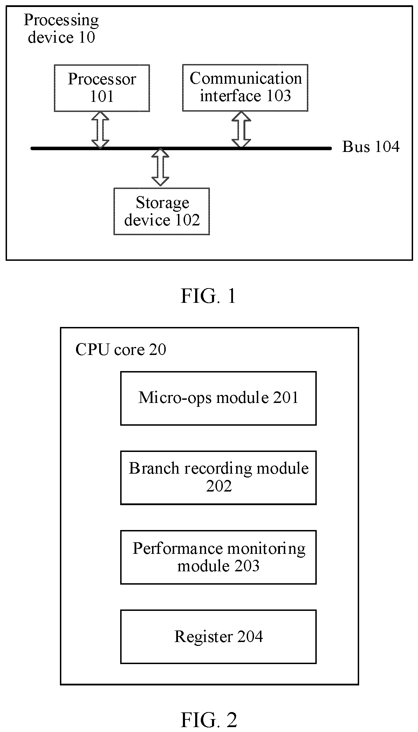

FIG. 1 is a diagram of a possible structure of a processing device 10.

The processing device 10 includes a processor 101, a storage device 102, and a communication interface 103. Any two of the processor 101, the storage device 102, and the communication interface 103 may be connected through a bus 104.

The processor 101 may be a CPU. The CPU may be configured to execute instructions in the storage device 102 to implement one or more functions, for example, determine whether a program is in a loop (loop) (or referred to as a loop state). In addition to the CPU, the processor 101 may further be an application-specific integrated circuit (application-specific integrated circuit, ASIC), a field programmable gate array (field programmable gate array, FPGA), a system on chip (system on chip, SoC), a complex programmable logic device (complex programmable logic device, CPLD), a graphics processing unit (graphics processing unit, GPU), a neural network accelerator (neural-network processing unit, NPU), or the like.

During actual application, there may be a plurality of processors 101. The plurality of processors 101 may include a plurality of processors of a same type, or may include a plurality of processors of different types. For example, the plurality of processors 101 are a plurality of CPUs. For another example, the plurality of processors 101 include one or more CPUs and one or more GPUs. For still another example, the plurality of processors 101 include one or more CPUs and one or more NPUs. Alternatively, the plurality of processors 101 include one or more CPUs, one or more GPUs, one or more NPUs, and the like.

The processor 101 (for example, the CPU or the NPU) may include one physical core (physical core/processor), or include a plurality of physical cores. The physical core is a real processor core that can be seen inside the processor. For ease of description, the physical core in the processor may be referred to as a processor core for short below.

A physical core (referred to as a CPU core for short) in the CPU is used as an example. For example, FIG. 2 is a diagram of an internal structure of a CPU core 20 according to an example of this application. The CPU core 20 includes a micro-ops (micro-ops/uOps) module 201, a branch recording module 202, a performance monitoring module 203, and a register 204.

It is clear that the CPU core 20 may further include another module that is not shown in FIG. 2.

The micro-ops module 201 is configured to detect and store a micro-ops loop sequence. When the micro-ops loop sequence is less than or equal to a capacity of the micro-ops module 201, the micro-ops loop sequence may be stored in the micro-ops module 201, so that a corresponding micro-ops sequence may not need to be obtained through front-end decoding, and the corresponding micro-ops sequence only needs to be consecutively extracted from the micro-ops module 201. The micro-ops module 201 is, for example, a loop stream detector (loop stream detector, LSD).

The branch recording module 202 is configured to record a branch jump that is last executed by the CPU core 20 for one or more times. For example, when executing a jump instruction 2, the CPU core 20 jumps from the instruction 2 to an instruction 11, and the branch recording module 202 may record a start position and a target position of the branch jump. That is, the start position is the instruction 2, and the target position is the instruction 11. The branch recording module 202 is, for example, a last branch recording (last branch recording, LBR) module.

The performance monitoring module 203 includes one or more counters (counters), and can track and count some underlying hardware events such as events related to the CPU core 20 (a quantity of executed instructions, a quantity of captured exceptions, a quantity of clock cycles, and the like), events related to a cache (cache) (a quantity of times of accessing an L1/L2 cache, a quantity of misses (misses), and the like), and events related to a translation lookaside buffer (translation lookaside buffer, TLB). These events reflect a behavior during program execution and can be used for program analysis and tuning. The performance monitoring module 203 is, for example, a performance monitoring unit (performance monitoring unit, PMU).

The register 204 is a high-speed storage component with a limited storage capacity, and may be used for temporarily storing instructions, data, and an address. In this application, the register may be specifically a register configured to define a CPU behavior. For ease of understanding, the register configured to define the CPU behavior may be referred to as a configuration register.

The storage device 102 is an apparatus configured to store data, and may be a memory or a hard disk.

The memory is an internal storage device that directly exchanges data with the processor 101. The data can be read and written in the memory at a high speed at any time, and the memory serves as a temporary data storage device of an operating system running in the processor 101 or another program that is being run. The memory includes a volatile memory (volatile memory), for example, a random access memory (random access memory, RAM) or a dynamic random access memory (dynamic random access memory, DRAM), or may include a non-volatile memory (non-volatile memory), for example, a storage class memory (storage class memory, SCM), or may include a combination of the volatile memory and the non-volatile memory. During actual application, a plurality of memories may be configured in the processing device 10. Optionally, the plurality of memories may be of different types. A quantity and types of memories are not limited in this embodiment. In addition, the memory may be configured to have a power-off protection function. The power-off protection function means that data stored in the memory is not lost even when a system is powered on again after a power failure. A memory with a power-off protection function is referred to as a non-volatile memory.

The hard disk is configured to provide a storage resource, for example, is configured to store data of a program, for example, data such as a picture, a video, audio, and a text. The hard disk includes but is not limited to a non-volatile memory (non-volatile memory), for example, a read-only memory (read-only memory, ROM), a hard disk drive (hard disk drive, HDD), or a solid-state drive (solid-state disk, SSD). A difference from the memory lies in that a data read/write speed of the hard disk is slow, and the hard disk is usually configured to persistently store data. In an implementation, data, program instructions, and the like in the hard disk need to be first loaded to the memory, and then a processor obtains the data and/or the program instructions from the memory.

The communication interface 103 is used for communicating with another device.

Generally, a processing device configures a computing resource in the processing device as a default configuration parameter. The computing resource is, for example, a processor or a core in the processor, and the configuration parameter is a parameter used when a program is run in the computing resource. For example, the configuration parameter includes a prefetch policy, and the prefetch policy includes a prefetch policy of a missing cache line (missing cache line), a prefetch policy of integer data access (integer data access), and a radical degree of a prefetch algorithm (for example, a passive (passive) policy or an aggressive (aggressive) policy).

Each type of program has its own running characteristic (or referred to as a behavior characteristic). For example, the running characteristic of the program includes a computing characteristic of the program and a memory access characteristic of the program. For example, the running characteristic of the program may be represented by a plurality of micro-architecture characteristics. For example, the plurality of micro-architecture characteristics include one or more of the following: a quantity of instructions executed by the processor core in each clock cycle, a loss rate of an instruction translation lookaside buffer (instruction translation lookaside buffer, iTLB), a cache (cache) loss rate, a prefetch hit rate, and a loss rate of a data translation lookaside buffer (data translation lookaside buffer, dTLB). It should be noted that the iTLB may also be referred to as an instruction list buffer, an instruction redirection bypass buffer, an address translation buffer, or the like. The dTLB may also be referred to as a data list buffer, a data redirection bypass buffer, a data translation buffer, or the like.

It should be further noted that the foregoing running characteristic is merely an example for description. In another case, in addition to one or more of the quantity of instructions executed by the processor core in each clock cycle, the loss rate of the iTLB, the cache loss rate, the prefetch hit rate, and the loss rate of the dTLB, the running characteristic may further include another running characteristic. Alternatively, the running characteristic does not include the quantity of instructions executed by the processor core in each clock cycle, the loss rate of the iTLB, the cache loss rate, the prefetch hit rate, or the loss rate of the dTLB, but includes another running characteristic. A specific running characteristic is not limited in this application.

Because various types of programs have respective running characteristics, when the computing resource runs the various types of programs by using the default configuration parameter, although smooth running of the various types of programs can be ensured, the programs cannot be efficiently run by using proper configuration parameters based on the running characteristics of the various types of programs.

Therefore, this application provides a method for running a program. The method for running the program is performed by a processing device or a computing resource in the processing device. An example in which the method is performed by the computing resource is used for description. A program is run in the computing resource, and the computing resource obtains a running characteristic of a subprogram in the program, and adjusts a configuration parameter of the computing resource based on the obtained running characteristic, so that the computing resource can efficiently run a subprogram that is in the program and that has a running characteristic similar to that of the foregoing subprogram.

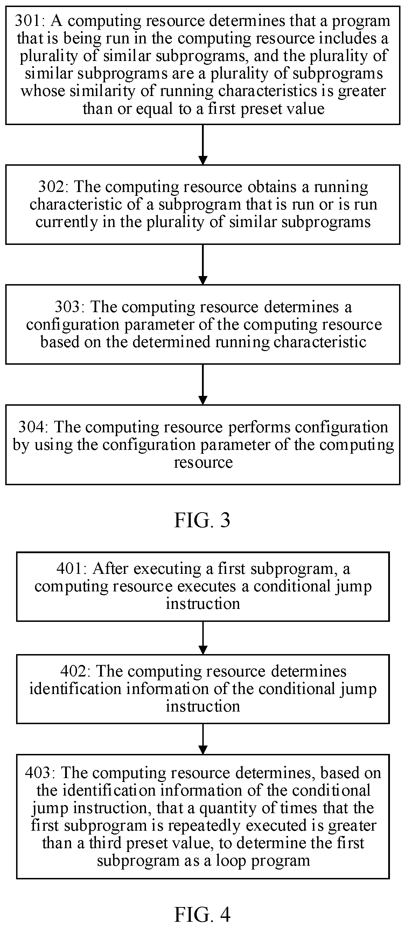

FIG. 3 is a schematic flowchart of a method for running a program according to an example of this application. Refer to FIG. 3. Explanations are as follows:
Step 301: A computing resource determines that a program that is being run in the computing resource includes a plurality of similar subprograms. The plurality of similar subprograms are a plurality of subprograms whose similarity of running characteristics is greater than or equal to a first preset value.

For example, the following provides representation forms in which the program includes the plurality of similar subprograms.

Representation form 1: The plurality of similar subprograms are a plurality of similar program segments. That is, the plurality of program segments have similar running characteristics. Specifically, a similarity of the running characteristics of the plurality of similar program segments is greater than or equal to the first preset value.

For example, a processing device or the computing resource performs static analysis on the plurality of program segments in advance, to obtain static analysis results respectively corresponding to the plurality of program segments, where each static analysis result may include a running characteristic of each program segment. Then, the processing device or the computing resource determines, based on the running characteristic of each of the plurality of program segments, that the plurality of program segments have the similar running characteristics. Correspondingly, in a process of running the program, the computing resource may directly determine, based on the foregoing pre-analysis results, that the program includes the plurality of similar program segments.

For another example, a processing device or the computing resource pre-runs the plurality of program segments, obtains a running characteristic corresponding to each program segment, and then determines, based on the running characteristics of the plurality of program segments, that the plurality of program segments have the similar running characteristics. Correspondingly, in a process of running the program again, the computing resource may directly determine, based on the foregoing pre-analysis results, that the program includes the plurality of similar program segments.

Representation form 2: The plurality of similar subprograms are a loop program that is in the program and that is executed for a plurality of times, where each subprogram corresponds to one or more loops of the loop program. To be specific, a similarity of running characteristics of the loop program in a plurality of loops is greater than or equal to the first preset value. For example, the program that is being run corresponds to an instruction stream, the instruction stream includes instruction stream segments (namely, the subprograms) respectively corresponding to the plurality of loops of the loop program, and a similarity of running characteristics of the plurality of instruction stream segments is greater than or equal to the first preset value.

Correspondingly, in a process of executing the program, if the computing resource determines that the program includes the loop program on which loop execution is performed, the computing resource determines that the program that is being run in the computing resource includes the plurality of similar subprograms. For details about an implementation of determining, by the computing resource, whether a loop program (denoted as a first subprogram) on which loop execution needs to be performed exists in the program, refer to descriptions in related embodiments in the following FIG. 4 to FIG. 6.

Step 302: The computing resource obtains a running characteristic of a subprogram that is run or is run currently in the plurality of similar subprograms.

Because the similarity of the running characteristics of the plurality of similar subprograms is greater than or equal to the first preset value, the computing resource may obtain the running characteristic of the subprogram that is run or is run currently from the plurality of similar subprograms, and use the determined running characteristic as a running characteristic of the plurality of similar subprograms.

For example, when the plurality of similar subprograms are the plurality of similar program segments, the computing resource obtains a running characteristic of a program segment that is run or is being run in the plurality of similar program segments, and uses, as a running characteristic of a program segment that has not been run in the plurality of similar program segments, the running characteristic of the program segment that is run or is being run. For example, the plurality of similar program segments are a program segment 1 to a program segment 10. The computing resource completes running of the program segment 1 and the program segment 2, and has not run the program segment 3 to the program segment 10 yet. The computing resource determines running characteristics of the program segment 1 and the program segment 2, and uses the determined running characteristics as running characteristics of the program segment 3 to the program segment 10.

For example, when the plurality of similar subprograms are the loop program that is in the program and that is executed by the computing resource for the plurality of times, the computing resource obtains a running characteristic in a loop process that is run or is being run, and uses the determined running characteristic as a running characteristic in a loop process that has not been run yet. For example, a quantity of times that the computing resource performs loop execution on a subprogram is 10, and in a loop running process of the subprogram, the computing resource determines a running characteristic of the subprogram in a process of the 1^{st} loop that is run or a process of the 2^{nd} loop that is currently being run, and uses the determined running characteristic as a running characteristic of the subprogram in processes of the 3^{rd} loop to the 10^{th} loop.

The following describes an implementation of obtaining the running characteristic by the computing resource. For example, a plurality of characteristic counters are set in the computing resource. For each characteristic counter, the computing resource determines corresponding characteristic count values of the characteristic counter before and after a subprogram is executed, to determine characteristic count values corresponding to the subprogram. The computing resource forms a running characteristic of the subprogram by using a plurality of characteristic count values that correspond to the subprogram and that are determined based on the plurality of characteristic counters.

For example, the computing resource includes three characteristic counters (denoted as a characteristic counter 1 to a characteristic counter 3), where the characteristic counter 1 is configured to record a quantity of instructions executed by a processor core in each clock cycle, the characteristic counter 2 is configured to record a quantity of cache misses, and the characteristic counter 3 is configured to record a quantity of misses of an instruction translation lookaside buffer.

Example 1: When the computing resource starts to execute the subprogram, characteristic count values of the characteristic counter 1 to the characteristic counter 3 are all 0s. When the computing resource completes execution of the subprogram, the characteristic count values of the characteristic counter 1 to the characteristic counter 3 are respectively 100, 200, and 20. In this case, the running characteristic of the subprogram includes 100, 200, and 20.

Example 2: When the computing resource starts to execute the subprogram, characteristic count values of the characteristic counter 1 to the characteristic counter 3 are respectively 100, 200, and 20. When the computing resource completes execution of the subprogram, the characteristic count values of the characteristic counter 1 to the characteristic counter 3 are respectively 201, 403, and 40. In this case, the running characteristic of the subprogram includes 101, 203, and 20.

Step 303: The computing resource determines a configuration parameter of the computing resource based on the determined running characteristic.

Herein, the configuration parameter of the computing resource is a parameter that needs to be configured in the computing resource, and the configuration parameter of the computing resource may be referred to as a target configuration parameter of the computing resource. Alternatively, it may be further understood that the configuration parameter of the computing resource is a configuration parameter most suitable for a running characteristic of a program that is currently being run. When the computing resource uses the configuration parameter, a running effect of the program is optimal. In this way, the configuration parameter of the computing resource may also be referred to as an optimal configuration parameter of the computing resource.

Example 1: A plurality of preset characteristics and preset configuration parameters respectively corresponding to the plurality of preset characteristics are preset in the computing resource. For example, preset characteristics 1 to 1000 and preset configuration parameters 1 to 1000 respectively corresponding to the preset characteristics 1 to 1000 are preset in the computing resource. The computing resource determines, from the plurality of preset characteristics, a target preset characteristic that matches the running characteristic, and uses, as the target configuration parameter of the computing resource, a preset configuration parameter corresponding to the target preset characteristic. With reference to the foregoing example, when the computing resource determines, from the preset characteristics 1 to 1000, that the target preset characteristic that matches the running characteristic is the preset characteristic 10, the computing resource uses the preset configuration parameter 10 as the target configuration parameter of the computing resource.

Example 2: A plurality of preset characteristics and addresses that are of preset configuration parameters and that respectively correspond to the plurality of preset characteristics are preset in the computing resource. For example, the computing resource stores, by using a ternary content addressable memory (ternary content addressable memory, TCAM), the plurality of preset characteristics and the addresses of the preset configuration parameters respectively corresponding to the plurality of preset characteristics. For example, preset characteristics 1 to 1000 and addresses 1 to 1000 that are of preset configuration parameters and that respectively correspond to the preset characteristics 1 to 1000 are preset in the computing resource. The computing resource determines, from the plurality of preset characteristics, a target preset characteristic that matches the running characteristic, reads a preset configuration parameter from an address that is of the preset configuration parameter and that corresponds to the target preset characteristic, and uses the read preset configuration parameter as the target configuration parameter of the computing resource. With reference to the foregoing example, when the computing resource determines, from the preset characteristics 1 to 1000, that the target preset characteristic that matches the running characteristic is the preset characteristic 10, the computing resource reads the preset configuration parameter from the address 10, and uses the read preset configuration parameter as the target configuration parameter of the computing resource.

It may be understood that the plurality of preset characteristics in Example 2 also correspond to respective preset configuration parameters.

Further, a correspondence between the preset characteristic and the preset configuration parameter may be obtained through machine learning. For example, the computing resource runs a large quantity of programs, samples running characteristics of the programs, and automatically optimizes performance of a program corresponding to each running characteristic, to obtain an optimal configuration parameter of the computing resource corresponding to the running characteristic. The running characteristic and the optimal configuration parameter are used as a preset characteristic and a preset configuration parameter, and are preset in the processing device. In addition, the processing device may further cluster the running characteristic and the optimal configuration parameter corresponding to the running characteristic, to reduce costs of storage space when the processing device stores, by using the storage space, the running characteristic and the optimal configuration parameter corresponding to the running characteristic.

Alternatively, the correspondence between the preset characteristic and the preset configuration parameter in the processing device may be set based on expert experience.

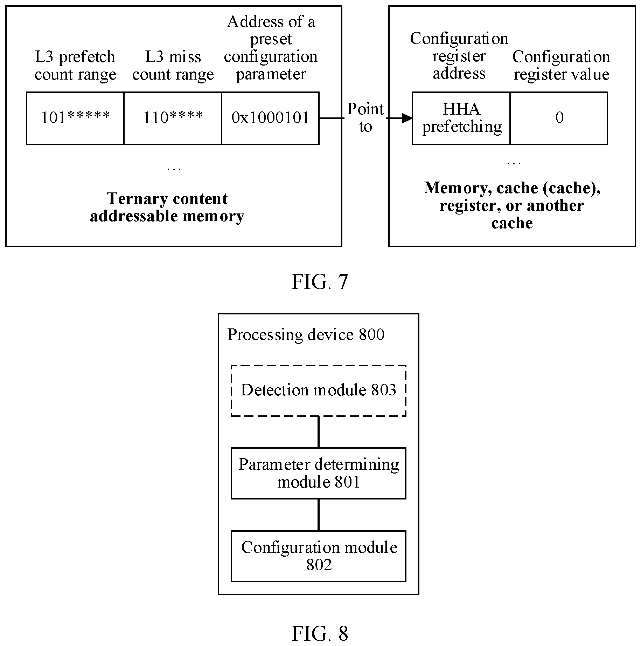

The following uses the machine learning as an example for description. Running characteristics of a large quantity of different programs and optimal configuration parameters corresponding to the running characteristics are clustered. The optimal configuration parameters may be obtained by using an artificial intelligence (artificial intelligence, AI) optimization algorithm, and the AI optimization algorithm is, for example, Bayesian optimization. A running characteristic of a type of program is that an L3 prefetch count range per 2¹⁰ instructions is 10100000 to 10110000, an L3 miss (miss) count range is 1100000 to 1101111, an address of a preset configuration parameter is 0x1000101, and the address points to a configuration register address and a configuration register value. The configuration register address is HHA prefetching, and the configuration register value is 0 (indicating that a function is disabled (off)). A specific storage form of the correspondence is shown in FIG. 7. An HHA is a component that maintains cache consistency between L3 and a memory. An HHA prefetch function prefetches data to L3.

It is clear that an example in FIG. 7 may also be set based on the expert experience. Specifically, an L3 prefetch count is high and an L3 loss rate is high. Based on the expert experience, it may be considered that there are a large quantity of invalid prefetches. In this case, disabling the HHA prefetching relieves a memory access bandwidth pressure, and helps improve performance.

In a possible actual application scenario, the processing device stores the preset characteristic and the address of the preset configuration parameter in the ternary content addressable memory, and stores, in a memory, a cache (cache), a register, or another cache of the processing device, the plurality of preset configuration parameters to which the plurality of addresses point.

Optionally, that the computing resource determines, from the plurality of preset characteristics, a target preset characteristic that matches the running characteristic may specifically include the following step 1 to step 3.

### Step 1: Normalization processing

For example, if a quantity of instructions in the preset characteristic is 1000, and a quantity of instructions in the running characteristic is 2000, the computing resource may normalize the quantity of instructions in the running characteristic to 1000. Further, assuming that the running characteristic includes that the quantity of instructions is 2000 and a quantity of L2 cache misses is 400, a normalized running characteristic includes that a quantity of instructions is 1000 and a quantity of L2 cache misses is 200.

For another example, if a quantity of instructions of the plurality of preset characteristics is 2⁸, and a quantity of instructions in the running characteristic is 2¹⁰, the computing resource may normalize the quantity of instructions in the running characteristic by shifting a count rightwards by two bits, to obtain a quantity of instructions 2⁸. Further, the computing resource also shifts another parameter in the running characteristic rightwards by two bits.

### Step 2: Dimension reduction processing

The computing resource includes A characteristic counters, and correspondingly, A characteristic count values respectively corresponding to the A characteristic counters form an A-dimensional preset characteristic. To reduce storage costs, dimension reduction processing may be performed on the A-dimensional preset characteristic, to obtain a B-dimensional preset characteristic, where A and B are both positive integers, and B is less than A.

Further, after obtaining an A-dimensional running characteristic, the computing resource may perform dimension reduction on the A-dimensional running characteristic, to obtain a B-dimensional running characteristic.

### Step 3: Characteristic matching

The computing resource determines matching degrees between the B-dimensional running characteristic and a plurality of B-dimensional preset characteristics, to select, from the plurality of B-dimensional preset characteristics, a preset characteristic with a highest matching degree as a target preset characteristic.

In a possible manner, for any dimension of any B-dimensional preset characteristic, a value of the dimension may be represented in binary. To be specific, the dimension includes a plurality of bits, and each of the plurality of bits corresponds to a value. For example, the dimension includes 10111 01100 (that is, 10 bits).

To further reduce a capacity (or the costs) of the storage space for storing the preset characteristic and improve characteristic matching efficiency, the computing resource may perform the following operation for each of a plurality of dimensions: The computing resource masks some bits in the dimension by using a mask. With reference to the foregoing example, based on a mask 11111 11000, the last three bits in 10111 01100 are masked, to obtain a value of the dimension after the masking, to be specific, 10111 01***.

In this way, when determining matching degrees between B dimensions of the running characteristic and B dimensions of the preset characteristic, the computing resource may first determine, for each of the B dimensions, a matching degree between the running characteristic and the preset characteristic in the dimension, and then determine the matching degrees between the B dimensions of the running characteristic and the B dimensions of the preset characteristic based on the matching degree between the running characteristic and the preset characteristic in each dimension.

Further, in an implementation of determining, by the computing resource for each dimension, the matching degree between the running characteristic and the preset characteristic in the dimension, the computing resource may determine the matching degree in a fuzzy matching manner. Still with reference to the foregoing example, if a value of a dimension after a mask in the preset characteristic is 10111 01***, and a value of the dimension in the running characteristic is 10111 00111, a matching degree between "10111 01" and "10111 00" may be determined in the fuzzy matching manner.

It should be noted that the dimension reduction processing is optional. When dimension reduction is not performed on the preset characteristic and the running characteristic by the computing resource, during characteristic matching, the computing resource determines matching degrees between the A-dimensional running characteristic and a plurality of A-dimensional preset characteristics, to select, from the plurality of A-dimensional preset characteristics, a preset characteristic with a highest matching degree as a target preset characteristic. In addition, in this case, for each of A dimensions of the preset characteristic, the computing resource may further mask some bits in the dimension by using a mask. For details, refer to the foregoing content in which some bits in each of the B dimensions of the preset characteristic are masked by using the mask. Details are not described herein again.

In addition, if the computing resource determines that the target preset characteristic that matches the running characteristic does not exist in the plurality of preset characteristics, the computing resource may use a default configuration parameter as the configuration parameter of the computing resource. In a possible implementation, a common preset characteristic is further set for the computing resource, all characteristics in the common preset characteristic are "*". To be specific, values of all dimensions of the common preset characteristic are "*", and the common preset characteristic corresponds to the default configuration parameter. For example, the common preset characteristic and the default configuration parameter corresponding to the common preset characteristic may be stored in the TCAM. When the computing resource determines that the target preset characteristic that matches the running characteristic does not exist in the plurality of preset characteristics, it may be determined that the common preset characteristic matches the target preset characteristic, and then, the default configuration parameter corresponding to the common preset characteristic is used as the configuration parameter of the computing resource.

Step 304: The computing resource performs configuration by using the configuration parameter (namely, the target configuration parameter) of the computing resource.

Optionally, the computing resource determines, based on the target configuration parameter and the current configuration parameter of the computing resource, whether to adjust the configuration parameter of the computing resource. Specifically, if the computing resource determines that the current configuration parameter is consistent with the target configuration parameter, no processing is performed; or if the computing resource determines that the current configuration parameter is inconsistent with the target configuration parameter, the current configuration parameter of the computing resource is adjusted to the target configuration parameter.

In an example, the target configuration parameter includes a configuration register value corresponding to a configuration register. That the computing resource adjusts the current configuration parameter of the computing resource to the target configuration parameter may be specifically: writing the configuration register value to the configuration register. Optionally, the target configuration parameter includes configuration register values respectively corresponding to a plurality of configuration registers. For example, the target configuration parameter includes configuration register values (denoted as a value a to a value c) respectively corresponding to a configuration register a to a configuration register c. The computing resource writes the value a to the configuration register a, writes the value b to the configuration register b, and writes the value c to the configuration register c.

In another example, the target configuration parameter includes a configuration register address and a configuration register value corresponding to the configuration register address. That the computing resource adjusts the current configuration parameter of the computing resource to the target configuration parameter may be specifically: writing the configuration register value to a configuration register corresponding to the configuration register address. Optionally, the target configuration parameter includes configuration register values respectively corresponding to a plurality of configuration register addresses. For example, the target configuration parameter includes an address a and a value a, an address b and a value b, and an address c and a value c. The computing resource writes the value a to a configuration register corresponding to the address a, writes the value b to a configuration register corresponding to the address b, and writes the value c to a configuration register corresponding to the address c. In comparison with the foregoing example, this manner helps improve parameter configuration flexibility.

In the foregoing technical solution, in a process of running the program, the computing resource determines the running characteristic of the subprogram that is run or is run currently in the plurality of similar subprograms included in the program, determines the target configuration parameter of the computing resource based on the running characteristic, and configures the target configuration parameter in the computing resource, so that running the program in the computing resource helps implement efficiency of running the program. For example, when the computing resource runs a program, the computing resource can optimize program performance by controlling a radical degree of a prefetch algorithm. Specifically, the computing resource obtains the running characteristic (for example, a memory bandwidth usage and a prefetch hit rate) of the subprogram that is run or is being run. When identifying that the memory bandwidth usage of the subprogram is extremely high and the prefetch hit rate is low, the computing resource may adjust the configuration parameter of the computing resource (for example, reduce the radical degree of the prefetch algorithm, to be specific, downgrade an original aggressive policy to a passive policy), to improve the program performance. On the contrary, the computing resource may adjust the configuration parameter of the computing resource (for example, improve the radical degree of the prefetch algorithm, to be specific, upgrade an original passive policy to an aggressive policy), to improve the program performance.

FIG. 4 is a schematic flowchart of determining a loop program by a computing resource.

Step 401: After executing a first subprogram, the computing resource executes a conditional jump instruction.

The conditional jump instruction is understood as an instruction that is obtained through translating a conditional judgment statement in a programming language and that can be understood by the computing resource, where the conditional judgment statement is, for example, if, while, or for.

A jump is specifically that the computing resource executes a second instruction after executing a first instruction. The first instruction and the second instruction are two inconsecutive instructions in a segment of program code, and the first instruction is before the second instruction, or the first instruction is after the second instruction. For example, in a segment of program code, the first instruction is located in the 1^{st} line, and the second instruction is located in the 10^{th} line.

That the computing resource executes the conditional jump instruction may be specifically that the computing resource reads the conditional jump instruction from a storage device, and executes the conditional jump instruction in a process of running a program. The storage device is, for example, a memory, a high bandwidth memory (high bandwidth memory, HBM), and a non-volatile memory. Optionally, the storage device is included in a processing device.

In addition, after the computing resource executes the first subprogram, if the conditional jump instruction is not executed, the computing resource determines that the first subprogram is not the loop program.

It should be added that the computing resource executes an instruction (for example, the conditional jump instruction) in the process of running the program, which is equivalent to a case in which the computing resource executes the instruction, or the program executes the instruction.

Step 402: The computing resource determines identification information of the conditional jump instruction.

For example, the identification information of the conditional jump instruction is address information of the conditional jump instruction, a hash of address information of the conditional jump instruction, or a mapping of address information of the conditional jump instruction.

The address information of the conditional jump instruction includes a start position and/or a target position of the conditional jump instruction. With reference to the example in step 401, the start position of the conditional jump instruction is the first instruction, and the target position is the second instruction.

Optionally, the computing resource obtains the identification information of the conditional jump instruction from a branch recording module.

Optionally, the computing resource further determines a first quantity of instructions. The first quantity of instructions is a total accumulative quantity (that is, a quantity of instructions) of instructions executed by the program during execution of the conditional jump instruction performed by the computing resource.

Further, a performance monitoring module includes an instruction counter, and the computing resource is specifically reading the first quantity of instructions from the instruction counter of the performance monitoring module. Based on whether the instruction counter has been reset, the following provides two examples for description. Example a: After the program starts to run, if the instruction counter has not been reset, the first quantity of instructions is a total accumulative quantity of instructions executed by the program. Example b: After the program starts to run, if the instruction counter is reset, the first quantity of instructions is a total accumulative quantity of instructions executed by the program after last reset of the instruction counter.

Optionally, the computing resource further determines a first quantity of execution times. The first quantity of execution times is a total quantity of times that the computing resource executes the conditional jump instruction. Similarly, the performance monitoring module further includes an execution times counter, and the computing resource can further read the first quantity of execution times from the execution times counter of the performance monitoring module. For details, refer to an implementation in which the computing resource reads the first quantity of instructions from the instruction counter of the performance monitoring module.

For example, both the branch recording module and the performance monitoring module are located in the computing resource. For another example, the branch recording module is located in the computing resource, some counters (for example, the instruction counter and the execution times counter) in the performance monitoring module are located in the computing resource, and another counter (for example, a counter for monitoring a quantity of bus communication times) in the performance monitoring module is located outside the computing resource.

Step 403: The computing resource determines, based on the identification information of the conditional jump instruction, that a quantity of times that the first subprogram is repeatedly executed is greater than a third preset value, to determine the first subprogram as the loop program.

In this application, that the computing resource determines the subprogram that is being executed by the computing resource as the loop program may also be considered as that the computing resource determines that the program that is being executed by the computing resource is in a loop state. The computing resource determines that the loop program being executed by the computing resource is to exit/has exited a loop, which may also be considered as that the computing resource determines that the loop program being executed by the computing resource is to exit/has exited the loop state.

The computing resource includes a cache (buffer), and the cache includes record information of a plurality of conditional jump instructions.

The record information of the conditional jump instruction includes a jump identifier. Optionally, the record information further includes one or more of the quantity of instructions, an execution length, and a quantity of execution times.

The following first uses caching record information of any conditional jump instruction as an example to explain each field in the record information and an update manner of the record information.
(1) Jump identifier: is determined based on identification information of the conditional jump instruction. For example, the jump identifier is the identification information of the conditional jump instruction, or the jump identifier is a hash of the identification information of the conditional jump instruction. For the identification information of the conditional jump instruction, refer to descriptions in step 402.
(2) Quantity of instructions: is a total accumulative quantity of instructions executed by the program during execution of the conditional jump instruction performed by the computing resource. For example, after the program starts to run, if the instruction counter is reset, the total accumulative quantity of instructions executed by the program is a total accumulative quantity of instructions executed by the program after last reset of the instruction counter.
(3) Execution length: The computing resource determines the execution length based on a total accumulative quantity of instructions executed by the program between two executions of the same conditional jump instruction, and the execution length is a length of the loop program.

It is explained as that the conditional jump instruction corresponding to the record information is, for example, a conditional jump instruction executed by the computing resource for a K^{th} time. Correspondingly, the execution length in the record information may be specifically determined by the computing resource based on a total accumulative quantity of instructions executed by the program between the K^{th} execution of the conditional jump instruction and (K-k)^{th} execution of the conditional jump instruction, where K and k are positive integers. Specially, when K is equal to 1, a value of the execution length in the record information may be 0.

In a case of k=1:
The execution length in the record information is specifically determined by the computing resource based on a total accumulative quantity of instructions executed by the program between the K^{th} execution of the conditional jump instruction and (K-1)^{th} execution of the conditional jump instruction. For example, the execution length is the total accumulative quantity of instructions executed by the program between two consecutive executions of the same conditional jump instruction.

In a case of k>1:
In an example, the execution length in the record information is specifically determined by the computing resource based on the total accumulative quantity of instructions executed by the program between the K^{th} execution of the conditional jump instruction and the (K-k)^{th} execution of the conditional jump instruction. For example, if the computing resource determines that a total accumulative quantity of instructions executed by the program is 500 between the 10^{th} execution of the conditional jump instruction and the 5^{th} execution of the conditional jump instruction, the execution length in the record information is specifically 500.

In another example, the execution length in the record information is specifically an average value of all conditional jump instructions that are executed twice consecutively between the K^{th} execution of the conditional jump instruction performed by the computing resource and the (K-k)^{th} execution of the conditional jump instruction performed by the computing resource. For example, if the computing resource determines that a total accumulative quantity of instructions executed by the program is 500 between the 10^{th} execution of the conditional jump instruction and the 5^{th} execution of the conditional jump instruction, the execution length in the record information is specifically 100.

(4) Quantity of execution times: is a quantity of times that the conditional jump instruction is executed by the computing resource.

The following uses an example in which the record information of the conditional jump instruction includes the jump identifier, the quantity of instructions, and the execution length to explain a manner of writing the record information of the conditional jump instruction to the cache by the computing resource.

When the computing resource is ready to write the record information of the conditional jump instruction to the cache, it is determined in advance whether the record information of the conditional jump instruction already exists in the current cache, and if record information of the conditional jump instruction exists in the current cache, the to-be-written record information is updated to the original record information, or if record information of the conditional jump instruction does not exist in the current cache, the to-be-written record information (that is, a piece of new record information) is written to the cache.

For example, the conditional jump instruction instructs the program to jump from an instruction 10 to an instruction 7. Correspondingly, identifier information of the conditional jump instruction includes a start position "instruction 10" and a target position "instruction 7", and the computing resource determines that the jump identifier is hash (10-7) based on the start position "instruction 10" and the target position "instruction 7".

When executing the conditional jump instruction for the 1^{st} time, the computing resource determines, based on the jump identifier "hash (10-7)", that the cache does not include record information of the conditional jump instruction, and that a total accumulative quantity of instructions executed by the program is 400. Further, the computing resource writes "hash (10-7), 400, and 0" as the record information of the conditional jump instruction to the cache.

When executing the conditional jump instruction for the 2^{nd} time, the computing resource determines, based on the jump identifier "hash (10-7)", that the cache includes the record information of the conditional jump instruction, and determines that a total accumulative quantity of instructions executed by the program is 500 during the 2^{nd} execution of the conditional jump instruction, and that a total accumulative quantity of instructions executed by the program is 100 (that is, 500-400) between the 1^{st} execution of the conditional jump instruction and the 2^{nd} execution of the conditional jump instruction. It may be understood herein that, in a process in which the processing device executes the "instruction 7" to the "instruction 10", there may be a function call or the like. Therefore, the total accumulative quantity of instructions executed by the program is 100 (to be specific, greater than 4). Further, the computing resource updates "hash (10-7), 500, and 100" to the existing record information "hash (10-7), 400, and 0" in the cache.

By analogy, when executing the conditional jump instruction for a n^{th} time (where n is greater than 2), the computing resource determines, based on the jump identifier "hash (10-7)", that the cache includes the record information of the conditional jump instruction. Further, the computing resource determines that a total accumulative quantity of instructions executed by the program during the n^{th} execution of the conditional jump instruction is X, and between (n-1)^{th} execution of the conditional jump instruction and the n^{th} execution of the conditional jump instruction, a total accumulative quantity of instructions executed by the program is Y. The computing resource updates "hash (10-7), X, and Y" to existing record information corresponding to the conditional jump instruction in the cache.

It should be added that, when the record information includes the jump identifier, or the record information includes the jump identifier and the quantity of instructions, or the record information includes the jump identifier and the quantity of execution times, a manner of writing the record information to the cache by the computing resource is similar to the foregoing.

Further, when the computing resource writes the record information of the conditional jump instruction to the cache, record information of a non-loop jump instruction (for example, a conditional jump instruction corresponding to if else) and record information of another conditional jump instruction between two same conditional jump instructions may be filtered out.

In a specific implementation, the computing resource sequentially writes the record information of the conditional jump instruction to the cache. When record information of a jump instruction is written, if determining that record information of the jump instruction already exists in the cache, and record information of another jump instruction is further recorded after the record information, the record information of the another jump instruction that is further recorded after the record information may be cleared, and the record information of the jump instruction in the cache is updated based on one or more of a new quantity of instructions of the conditional jump instruction, execution length, and quantity of execution times.

For example, program code of a For loop is as follows:

```
          For(i=0;i<5;i++){
              do sth1;
              For(j=0;j<10;j++){
                   do sth2;
          }
          }
```

Correspondingly, when executing the program code of the For loop, the computing resource specifically executes an instruction stream in Table 1:

**Table 1**

| | Instruction stream | Description of instructions |
|---|---|---|
| 1 | i=0 | - |
| 2 | b 11 | Unconditional jump to an instruction 11 |
| 3 | i=i+1 | - |
| 4 | do sthl | - |
| 5 | j=0 | - |
| 6 | b 9 | Unconditional jump to an instruction 9 |
| 7 | j=j+1 | - |
| 8 | do sth2 | - |
| 9 | cmp j 9 | Compare j and 9 |
| 10 | ble 7 | A last instruction sets a flag to indicate whether j and 9 are equal, and if the instruction indicates that j is less than or equal to 9, the instruction jumps to instruction 7 (where a last branch record contains a jump record, that is, from 10 to 7) |
| 11 | cmp i 4 | Compare i and 4 |
| 12 | ble 3 | A last instruction sets a flag to indicate whether i and 4 are equal, and if the instruction indicates that i is less than or equal to 4, the instruction jumps to instruction 3 (where a last branch record contains a jump record, that is, from 12 to 3) |

A jump sequence corresponding to Table 1 is shown in Table 2.

**Table 2**

| Start position | Target position | Description |
|---|---|---|
| 2 | 11 | Non-conditional jump, filtered out |
| 12 | 3 | - |
| 6 | 9 | Non-conditional jump, filtered out |
| 10 | 7 | Repeat 10 times |
| 12 | 3 | - |
| 10 | 7 | Repeat 10 times |
| 12 | 3 | - |

In this way, when the computing resource writes the record information of the conditional jump instruction to the cache, the following actions are specifically performed:
Step 1: Insert hash (12-3), X1, and Y1;
Step 2: Insert hash (10-7), X2, and Y2;
Step 3: Update hash (10-7), X3, and Y3;
Step 4: Update hash (10-7), X4, and Y4;
...
Step 11: Update hash (10-7), X11, and Y11;
Step 12: Update hash (12-3), X12, and Y12, and delete hash (10-7), X11, and Y11;
Step 13: Insert hash (10-7), X13, and Y13;
Step 14: Update hash (10-7), X14, and Y14; and
Step 15: Update hash (10-7), X15, and Y15.
...

It should be noted that, for ease of understanding, both the quantity of instructions and the execution length are represented by X and Y. Further, in step 12, when "hash (12-3), X12, and Y12" is written by the computing resource, it is determined that "hash (12-3), X1, and Y1" already exists in the cache, and another record information, to be specific, "hash (10-7), X11, and Y11", is further included in record information after "hash (12-3), X1, and Y1", so that the computing resource updates "hash (12-3), X12, and Y12" and deletes "hash (10-7), X11, and Y11" at the same time. In this way, a data amount of the record information of the conditional jump instruction in the cache is reduced, and a parameter of the computing resource is prevented from being configured frequently.

Similarly, when the record information includes the quantity of execution times, the computing resource may further record, in each piece of record information, a quantity of execution times of a currently executed conditional jump instruction. For example, in the foregoing step 3, a quantity of execution times of the conditional jump instruction recorded by the computing resource is equal to 2. For another example, in the foregoing step 12, a quantity of execution times of the conditional jump instruction recorded by the computing resource is equal to 2.

With reference to the foregoing descriptions of the cache, an implementation in which the computing resource determines, based on a plurality of pieces of record information in the cache, that the first subprogram is the loop program after execution of the first subprogram is completed and the conditional jump instruction is executed is described.

After executing the conditional jump instruction, the computing resource determines, based on the identification information of the conditional jump instruction, whether the record information of the conditional jump instruction exists in the cache. Specifically, the computing resource determines the jump identifier based on the identification information of the conditional jump instruction, where the jump identifier is, for example, the identification information of the conditional jump instruction, or the hash of the identification information of the conditional jump instruction. The computing resource traverses the plurality of pieces of record information in the cache, and if determining that a piece of record information includes the jump identifier, determines that the cache includes the record information of the conditional jump instruction; or if it is determined that none of the plurality of pieces of record information in the cache includes the jump identifier, determines that the cache does not include the record information of the conditional jump instruction.

Further, if the computing resource determines that the record information of the conditional jump instruction exists in the cache, the computing resource determines, based on the record information of the conditional jump instruction in the cache, whether the first subprogram is the loop program, and updates the record information of the conditional jump instruction in the cache. If the computing resource determines that the record information of the conditional jump instruction does not exist in the cache, the record information of the conditional jump instruction is added to the cache. Different cases are described as follows:
Case 1: The computing resource determines that the cache includes the record information of the conditional jump instruction.

The computing resource determines, based on the record information of the conditional jump instruction that already exists in the cache, that a quantity of times that the first subprogram is repeatedly executed by the computing resource is greater than the third preset value, and then determines a first program as the loop program.

In a possible manner, if the record information of the conditional jump instruction already exists in the cache, it indicates that the first subprogram is repeatedly executed by the computing resource, and the computing resource determines that the quantity of times that the first subprogram is repeatedly executed by the computing resource is greater than the third preset value, to determine the first program as the loop program, where a value of the third preset value is 1.

In another possible manner, the record information of the conditional jump instruction that already exists in the cache includes the jump identifier and the quantity of execution times of the conditional jump instruction. If the computing resource determines that the quantity of execution times of the conditional jump instruction is greater than the third preset value, the computing resource determines the first program as the loop program, where a value of the third preset value is, for example, 2.

In still another possible manner, the record information of the conditional jump instruction that already exists in the cache includes the jump identifier, a quantity of instructions (denoted as a second quantity of instructions), and an execution length (denoted as a second execution length).

The second quantity of instructions is a total accumulative quantity of instructions executed by the program during execution of the same conditional jump instruction before the computing resource executes the conditional jump instruction (namely, step 401). It is explained as that the computing resource executes the conditional jump instruction for a plurality of times. For example, if a current execution (namely, step 401) time is a N^{th} time, the second quantity of instructions may be a total accumulative quantity of instructions executed by the program during (N-1)^{th} execution of the conditional jump instruction performed by the computing resource.

The second execution length is a total accumulative quantity of instructions executed by the program between two executions of the same conditional jump instruction before the computing resource executes the conditional jump instruction (namely, step 401). It is explained as that the computing resource executes the conditional jump instruction for the plurality of times. For example, if the current execution (namely, step 401) time is the N^{th} time, the second execution length is a total accumulative quantity of instructions executed by the program between the (N-1)^{th} execution of the conditional jump instruction performed by the computing resource and (N-2)^{th} execution of the conditional jump instruction performed by the computing resource.

The computing resource determines, based on the second quantity of instructions and the second execution length, the first program as the loop program. For details, refer to the following possible manner 1 or possible manner 2.

### The possible manner 1:

If the computing resource determines that the second execution length is 0 (that is, the record information is recorded when the computing resource executes the conditional jump instruction for the 1^{st} time), the computing resource determines the first subprogram as the loop program.

If the computing resource determines that the second execution length is not 0 (that is, the record information is recorded when the computing resource executes the conditional jump instruction for an m^{th} time, and m is greater than 1), a difference between the second quantity of instructions and the first quantity of instructions is used as a first execution length. When determining that a difference between the first execution length and the second execution length is less than a difference threshold, the computing resource determines the first subprogram as the loop program. On the contrary, when determining that a difference between the first execution length and the second execution length is greater than or equal to a difference threshold, the computing resource determines that the first subprogram is not the loop program.

### The possible manner 2:

If the computing resource determines that the second execution length is 0 (that is, the record information is recorded when the computing resource executes the conditional jump instruction for the 1^{st} time), the computing resource determines that the first subprogram is not the loop program.

If the computing resource determines that the second execution length is not 0 (that is, the record information is recorded when the computing resource executes the conditional jump instruction for an m^{th} time, and m is greater than 1), a first execution length is determined based on the second quantity of instructions and the first quantity of instructions. When determining that a difference between the first execution length and the second execution length is less than a difference threshold, the computing resource determines the first subprogram as the loop program. On the contrary, when determining that a difference between the first execution length and the second execution length is greater than or equal to a difference threshold, the computing resource determines that the first subprogram is not the loop program.

It may be understood that, in the possible manner 1, when the computing resource consecutively executes the first subprogram twice, the computing resource considers the first subprogram as the loop program; and in the possible manner 2, when the computing resource consecutively executes the first subprogram three times, the computing resource considers the first subprogram as the loop program. In this way, the possible manner 2 has higher accuracy than the possible manner 1.

In addition, the computing resource further updates, based on one or more of the jump identifier of the conditional jump instruction, the first quantity of instructions, the first execution length, and the first quantity of execution times, the record information of the conditional jump instruction in the cache. For example, the computing resource updates, based on the jump identifier of the conditional jump instruction, the first quantity of instructions and the first execution length to the record information corresponding to the conditional jump instruction in the cache. To be specific, the computing resource updates the second quantity of instructions in the record information corresponding to the conditional jump instruction to the first quantity of instructions, and updates the second execution length in the record information corresponding to the conditional jump instruction to the first execution length.

In a possible manner, if the record information of the conditional jump instruction includes a quantity of execution times, the computing resource may further first update the quantity of execution times in the record information, and when an updated quantity of execution times is greater than the third preset value, it is determined that the quantity of times that the first subprogram is repeatedly executed by the computing resource is greater than the third preset value, to determine the first program as the loop program.

Case 2: The computing resource determines that the cache does not include the record information of the conditional jump instruction.

The computing resource determines that the first subprogram is not the loop program. Further, the computing resource further adds the record information of the conditional jump instruction to the cache based on one or more of the jump identifier of the conditional jump instruction, the first quantity of instructions, and the first execution length. For example, the computing resource adds one or more of the jump identifier of the conditional jump instruction, the first quantity of instructions, the first execution length, and a first quantity of execution times to the cache as the record information of the conditional jump instruction. For example, a value of the first execution length is 0, and a value of the first quantity of execution times is 1.

It should be additionally noted that, that the computing resource determines whether the cache includes the record information of the conditional jump instruction may also mean that the computing resource attempts to obtain the record information of the conditional jump instruction from the cache, and then determines, based on whether the record information of the conditional jump instruction is obtained, whether the first subprogram is the loop program. Specifically, if the computing resource can obtain the record information of the conditional jump instruction from the cache, the computing resource determines, based on the obtained record information of the conditional jump instruction, that the quantity of times that the first subprogram is repeatedly executed by the computing resource is greater than the third preset value, and then determines the first program as the loop program; or if the computing resource fails to obtain the record information of the conditional jump instruction from the cache, the computing resource determines that the first subprogram is not the loop program.

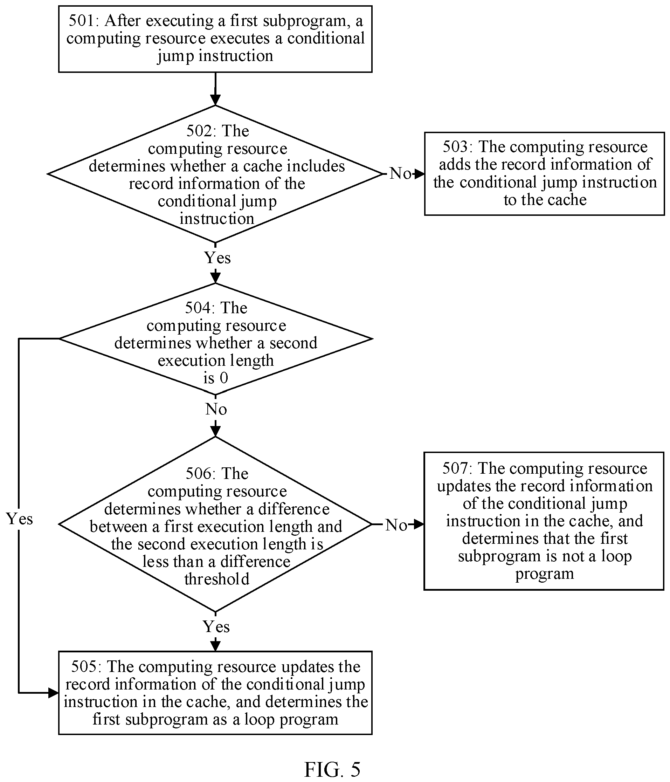

Based on the possible manner 1 in the foregoing case 1 and the case 2, FIG. 5 is a schematic flowchart of a specific implementation of a computing resource determining a loop program according to an example of this application. It may be understood that FIG. 5 is a specific implementation of FIG. 4. For related terms in FIG. 5, refer to descriptions in the foregoing embodiment related to FIG. 4.

Step 501: After executing a first subprogram, the computing resource executes a conditional jump instruction.

Step 502: The computing resource determines, based on a jump identifier of the conditional jump instruction, whether cache includes record information of the conditional jump instruction. Specifically, if the computing resource determines that the cache does not include the record information of the conditional jump instruction, step 503 is performed; or if the computing resource determines that the cache includes the record information of the conditional jump instruction, step 504 is performed.

Step 503: The computing resource adds the record information of the conditional jump instruction to the cache.

Step 504: The computing resource determines whether a second execution length is 0. Specifically, if the computing resource determines that the second execution length is 0, step 505 is performed; or if the computing resource determines that the second execution length is not 0, step 506 is performed.

Step 505: The computing resource updates the record information of the conditional jump instruction in the cache, and determines the first subprogram as the loop program.

Step 506: The computing resource determines whether a difference between a first execution length and the second execution length is less than a difference threshold. Specifically, if the computing resource determines that the difference between the first execution length and the second execution length is less than the difference threshold, step 505 is performed; or if the computing resource determines that the difference between the first execution length and the second execution length is greater than or equal to the difference threshold, step 507 is performed.

Step 507: The computing resource updates the record information of the conditional jump instruction in the cache, and determines that the first subprogram is not the loop program.

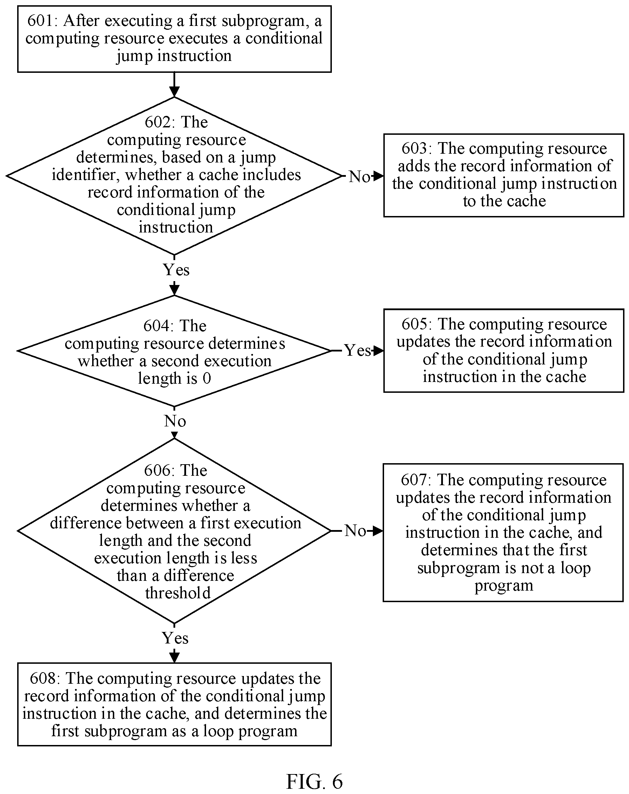

Based on the possible manner 2 in the foregoing case 1 and the case 2, FIG. 6 is a schematic flowchart of a specific implementation of a computing resource determining a loop program according to an example of this application. It may be understood that FIG. 6 is another specific implementation of FIG. 4. For related terms in FIG. 6, refer to descriptions in the foregoing embodiment related to FIG. 4.

Step 601: After executing a first subprogram, the computing resource executes a conditional jump instruction.

Step 602: The computing resource determines, based on a jump identifier, whether a cache includes record information of the conditional jump instruction.

Specifically, if the computing resource determines that the cache does not include the record information of the conditional jump instruction, step 603 is performed; or if the computing resource determines that the cache includes the record information of the conditional jump instruction, step 604 is performed.

Step 603: The computing resource adds the record information of the conditional jump instruction to the cache.

Step 604: The computing resource determines whether a second execution length is 0.

Specifically, if the computing resource determines that the second execution length is 0, step 605 is performed; or if the computing resource determines that the second execution length is not 0, step 606 is performed.

Step 605: The computing resource updates the record information of the conditional jump instruction in the cache.

Step 606: The computing resource determines whether a difference between a first execution length and the second execution length is less than a difference threshold. Specifically, if the computing resource determines that the difference between the first execution length and the second execution length is less than the difference threshold, step 608 is performed; or if the computing resource determines that the difference between the first execution length and the second execution length is greater than or equal to the difference threshold, step 607 is performed.

Step 607: The computing resource updates the record information of the conditional jump instruction in the cache, and determines that the first subprogram is not the loop program.

Step 608: The computing resource updates the record information of the conditional jump instruction in the cache, and determines the first subprogram as the loop program.

Optionally, after executing (or obtaining or receiving) the conditional jump instruction, the computing resource may further first determine whether the conditional jump instruction points to a small loop, where the small loop refers to a loop in which a quantity of instructions executed in a single loop is less than a second preset value. Optionally, the computing resource may determine, based on an indication in a micro-ops module (for example, an LSD), whether the program is in a small-loop state, to determine whether the conditional jump instruction points to the small loop. If the computing resource determines that the conditional jump instruction points to the small loop, the conditional jump instruction is filtered out, and the foregoing step 402 and step 403 do not need to be performed. It may also be understood that the program is in a loop state, and a quantity of instructions that are in a single loop and that correspond to the loop state is greater than the second preset value. In this way, a data amount of the record information of the conditional jump instruction in the cache is reduced, to save cache space of the computing resource. In addition, this further helps avoid frequent adjustment of a configuration parameter of the computing resource, and reduce computing overheads of the computing resource.

It should be added that, when a plurality of similar subprograms are a loop program that is in the program and that is executed for a plurality of times, because a quantity of loops is limited, the computing resource further needs to identify that the program has/is to exit a loop (where for example, a subprogram on which loop execution is performed ends) as early as possible, to avoid a case in which a configuration parameter applicable to the loop is still used for running the program in the computing resource when the program has exited the loop. The following still uses the first subprogram in the program as an example for description.

In a first possible manner, after determining the first subprogram as the loop program, the computing resource may further determine an instruction quantity threshold based on a first quantity of instructions and a preset execution length. For example, the instruction quantity threshold is equal to a sum of the first quantity of instructions and the preset execution length. Optionally, the preset execution length is preset, and the preset execution length is greater than the first execution length and also greater than the second execution length. Optionally, the preset execution length is the first execution length or the second execution length.

Optionally, the computing resource writes the jump identifier of the conditional jump instruction and the instruction quantity threshold to the cache together, so that the computing resource may determine, based on the jump identifier and the instruction quantity threshold that are in the cache, whether the program exits the loop. In other words, loop execution performed on the first subprogram is completed. In a possible manner, the computing resource writes the instruction quantity threshold to record information corresponding to the jump identifier (that is, the record information in step 403). It may be understood that the record information corresponding to the jump identifier not only includes one or more of a quantity of instructions, an execution length, and a quantity of execution times corresponding to the jump identifier, but also includes the instruction quantity threshold corresponding to the jump identifier. In another possible manner, the computing resource writes the jump identifier of the conditional jump instruction and the instruction quantity threshold to the cache as one piece of record information separately.

If the computing resource determines that the new conditional jump instruction is not executed again when a total accumulative quantity of instructions executed by the program exceeds the instruction quantity threshold, the computing resource determines that the program exits the loop. In other words, the loop execution performed on the first subprogram is completed. If the computing resource determines that the new conditional jump instruction is executed again before a total accumulative quantity of instructions executed by the program exceeds the instruction quantity threshold, the computing resource determines that the program is still in the loop. In other words, the loop execution performed on the first subprogram is still performed.

In a second possible manner, after determining the first subprogram as the loop program, the computing resource may further write the preset execution length (or referred to as a preset quantity of instructions) to a preset register. Each time the computing resource executes an instruction, the computing resource indicates that a quantity of instructions in the preset register is decreased by 1. In this way, when a value of the quantity of instructions in the preset register is 0, if the computing resource still has not executed the new conditional jump instruction again, the computing resource determines that the program exits the loop. In other words, the loop execution performed on the first subprogram is completed. If the computing resource executes the new conditional jump instruction again before a value of the quantity of instructions in the preset register is 0, the computing resource determines that the program is still in the loop. In other words, the loop execution performed on the first subprogram is still performed. Further, each time the computing resource executes the conditional jump instruction, the preset quantity of instructions may be refreshed to the preset register.

Optionally, after determining that the program exits the loop, the computing resource further determines the configuration parameter of the computing resource as a default configuration parameter. In a possible implementation, when determining the current configuration parameter as the default configuration parameter, the computing resource does not adjust the current configuration parameter, and when determining that the current configuration parameter is not the default configuration parameter, the computing resource adjusts the current configuration parameter to the default configuration parameter.

Optionally, after the computing resource determines that the loop execution that is performed by the program and that is performed on the first subprogram is still performed, in an example, the computing resource further obtains a running characteristic of the first subprogram, and determines a target configuration parameter of the computing resource based on the running characteristic. In another example, in a process of the loop execution performed on the first subprogram, the computing resource may no longer detect a running characteristic of the first subprogram in each loop, but adjust the configuration parameter of the computing resource to the default configuration parameter after determining that the loop execution performed on the first subprogram is completed. The latter example helps reduce overheads or complexity in a process of running the program in the computing resource.

It should be added that when the computing resource is a processor, the processor may include a plurality of processor cores.

In a possible manner, in a process of running the program by each processor core, the processor core performs the method in the foregoing method embodiment to determine a target configuration parameter of the processor core. In other words, the target configuration parameter is based on a granularity of the processor core. The processor core then configures the target configuration parameter in the processor core.

For example, the computing resource includes a processor core 1 to a processor core 5. When the processor core 1 runs a program, the processor core 1 further performs the method in the foregoing method embodiment to determine a target configuration parameter 1 of the processor core 1. The processor core 1 then configures the target configuration parameter 1 in the processor core 1. Similarly, other processor cores may also determine respective target configuration parameters based on programs run by the processor cores.

In another possible manner, the plurality of processor cores run a same program, and one processor core is configured to perform the method in the foregoing method embodiment to determine a target configuration parameter corresponding to the same program. In other words, the target configuration parameter is based on a granularity of the program. Further, the processor core for determining the target configuration parameter may be one of the plurality of processor cores that run the program, or may be another processor core that is in the computing resource and that is independent of the plurality of processor cores. The processor core can further separately configure the target configuration parameter in the plurality of processor cores.

For example, the computing resource includes a processor core 1 to a processor core 5. In an example, the processor core 1 to the processor core 5 run a same program, and in a process of running the program, the processor core 1 further performs the method in the foregoing method embodiment, to determine a target configuration parameter corresponding to the same program, and configure the target configuration parameter corresponding to the same program in the processor core 1 to the processor core 5. In another example, a processor core 2 to the processor core 5 run a same program, and the processor core 1 performs the method in the foregoing method embodiment, to determine a target configuration parameter corresponding to the same program, and configure the target configuration parameter corresponding to the same program in the processor core 2 to the processor core 5.

Based on the foregoing content and a same concept, FIG. 8 is a diagram of a possible structure of a processing device according to this application. The processing device may be configured to implement functions of the foregoing method embodiments, and therefore has beneficial effects of the foregoing method embodiments.

As shown in FIG. 8, the processing device 800 includes a parameter determining module 801 and a configuration module 802.

An apparatus for running a program includes the parameter determining module 801 and the configuration module 802.

The parameter determining module 801 is configured to: when determining that a program that is being run in a computing resource in the processing device includes a plurality of similar subprograms, obtain a running characteristic of a subprogram that is run or is run currently in the plurality of similar subprograms, where the plurality of similar subprograms are a plurality of subprograms whose similarity of running characteristics is greater than or equal to a first preset value; and determine a configuration parameter of the computing resource based on the running characteristic.

The configuration module 802 is configured to configure the computing resource by using the determined configuration parameter.

In a possible implementation, the plurality of similar subprograms are a loop program that is in the program and that is executed for a plurality of times, and each subprogram corresponds to one or more loops of the loop program.

In a possible implementation, a quantity of instructions of the loop program is greater than a second preset value.

In a possible implementation, the apparatus further includes a detection module 803, where the detection module 803 is configured to determine that the program that is being run in the computing resource includes the plurality of similar subprograms. Specifically, when determining that a quantity of times that a first subprogram in the program is repeatedly executed is greater than a third preset value, the detection module 803 determines the first subprogram as the loop program.

In a possible implementation, when determining whether the quantity of times that the first subprogram in the program is repeatedly executed is greater than the third preset value, the detection module 803 is specifically configured to: after execution of the first subprogram is completed and a conditional jump instruction is executed, determine whether record information of the conditional jump instruction exists; and if determining that the record information of the conditional jump instruction exists, determine, based on the record information of the conditional jump instruction, whether the quantity of times that the first subprogram is repeatedly executed is greater than the third preset value; or if determining that the record information of the conditional jump instruction does not exist, add the record information of the conditional jump instruction.

In a possible implementation, after executing the conditional jump instruction, the detection module 803 is further configured to determine whether the conditional jump instruction points to a small loop, where the small loop refers to a loop in which a quantity of instructions executed in a single loop is less than the second preset value. If the conditional jump instruction points to the small loop, the conditional jump instruction is filtered out; or if the conditional jump instruction does not point to the small loop, it is further determined whether the record information of the conditional jump instruction exists.

In a possible implementation, the record information is recorded in a preset of cache of the computing resource.

In a possible implementation, when determining whether the record information of the conditional jump instruction exists, the detection module 803 is specifically configured to: determine a jump identifier based on identification information of the conditional jump instruction, where the jump identifier is the identification information of the conditional jump instruction, or a hash of the identification information of the conditional jump instruction; and traverse a plurality of pieces of record information in the cache, and if determining that a piece of record information includes the jump identifier, determine that the cache includes the record information of the conditional jump instruction; or if determining that none of the plurality of pieces of record information in the cache includes the jump identifier, determine that the cache does not include the record information of the conditional jump instruction. Optionally, the identification information of the conditional jump instruction is obtained from a branch recording module. The identification information includes a start position and/or a target position, or includes a hash of a start position and/or a target position.

In a possible implementation, when determining, based on the record information, that the quantity of times that the first subprogram is repeatedly executed is greater than the third preset value, the detection module 803 is specifically configured to: determine, based on a quantity of instructions and an execution length in the record information, that the quantity of times that the first subprogram is repeatedly executed is greater than the third preset value, where the quantity of instructions in the record information indicates an accumulative quantity of instructions executed by the program during last execution of the conditional jump instruction; and the execution length in the record information is a difference between accumulative quantities of instructions executed by the program during first two times of execution of the conditional jump instruction respectively.

In a possible implementation, the third preset value is equal to 2. When determining, based on the quantity of instructions and the execution length in the record information, that the quantity of times that the first subprogram is repeatedly executed is greater than the third preset value, the detection module 803 is specifically configured to: use the quantity of instructions executed by the program when the conditional jump instruction is executed as a first quantity of instructions; use a difference between the first quantity of instructions and the quantity of instructions in the record information as a first execution length; and if determining that the execution length in the record information is not 0, and a difference between the first execution length and the execution length in the record information is less than a difference threshold, determine that the quantity of times that the first subprogram is repeatedly executed is greater than 2. In a possible implementation, after determining that the quantity of times that the first subprogram is repeatedly executed is greater than the third preset value, the detection module 803 is further configured to update the record information based on the first quantity of instructions and the first execution length.

In a possible implementation, after determining the first subprogram as the loop program, the detection module 803 is further configured to: update the quantity of instructions in the record information based on the accumulative quantity of instructions (that is, the first quantity of instructions) executed by the program during the execution of the conditional jump instruction; determine an instruction quantity threshold based on an updated first quantity of instructions and a preset execution length in the record information; and when the quantity of instructions executed by the program reaches the instruction quantity threshold, if the conditional jump instruction is not executed again, determine that the loop program has exited; and the parameter determining module 801 is further configured to determine the configuration parameter of the computing resource as a default configuration parameter.

In a possible implementation, when determining, based on the record information, whether the quantity of times that the first subprogram is repeatedly executed is greater than the third preset value, the detection module 803 is specifically configured to: determine, based on a quantity of times that the conditional jump instruction in the record information is executed, whether the quantity of times that the conditional jump instruction is executed is greater than the third preset value; and when determining that the quantity of times that the conditional jump instruction is executed is greater than the third preset value, determine that the quantity of times that the first subprogram is repeatedly executed is greater than the third preset value.

In a possible implementation, when determining, based on the record information, whether the quantity of times that the first subprogram is repeatedly executed is greater than the third preset value, the detection module 803 is specifically configured to: update the quantity of times that the conditional jump instruction in the record information is executed; and determine, based on an updated quantity of times that the conditional jump instruction is executed, whether the quantity of times that the conditional jump instruction is executed is greater than the third preset value.

In a possible implementation, when determining a running characteristic of a loop in which the first subprogram is run in the computing resource, the parameter determining module 801 is specifically configured to: obtain a running characteristic of the program that is being run in the computing resource when the conditional jump instruction is executed; obtain a running characteristic of the program when the conditional jump instruction is executed once before the conditional jump instruction is executed currently; and determine, based on the running characteristics obtained twice, the running characteristic of the loop in which the first subprogram is run in the computing resource.

In a possible implementation, when determining the configuration parameter of the computing resource based on the running characteristic, the parameter determining module 801 is specifically configured to: determine, from a plurality of preset characteristics, a target preset characteristic that matches the running characteristic; and determine, as the configuration parameter of the computing resource, a preset configuration parameter corresponding to the target preset characteristic.

For example, the configuration parameter of the computing resource includes a prefetch policy, and the prefetch policy includes a prefetch policy of a missing cache line, a prefetch policy of integer data access, a radical degree of a prefetch algorithm, and the like.

In a possible implementation, when determining, from the plurality of preset characteristics, the target preset characteristic that matches the running characteristic, the parameter determining module 801 is specifically configured to: perform dimension reduction processing on an A-dimensional running characteristic, to obtain a B-dimensional running characteristic; and select, from a plurality of B-dimensional preset characteristics, a preset characteristic with a highest matching degree as the target preset characteristic based on matching degrees between the B-dimensional running characteristic and the plurality of B-dimensional preset characteristics, where both A and B are positive integers, and B is less than A.

In a possible implementation, when determining a matching degree between the B-dimensional running characteristic and any B-dimensional preset characteristic, the parameter determining module 801 is specifically configured to: for any one of B-dimensional dimensions, determine a matching degree between a running characteristic and a preset characteristic that correspond to the dimension; and determine, based on a matching degree corresponding to each of the B-dimensional dimensions, a matching degree between the B-dimensional running characteristic and a B-dimensional preset characteristic. In a possible implementation, in a dimension of the B-dimensional preset characteristic, the dimension includes a plurality of bits, and values of some bits in the plurality of bits are masked by using a mask. When the parameter determining module 801 determines, for the dimension, the matching degree between the running characteristic and the preset characteristic that correspond to the dimension, the parameter determining module 801 may specifically determine the matching degree in a fuzzy matching manner.

In a possible implementation, if the parameter determining module 801 does not determine, from the plurality of preset characteristics, the target preset characteristic that matches the running characteristic, the default configuration parameter is used as the configuration parameter of the computing resource.

In a possible implementation, the configuration parameter of the computing resource includes a configuration register address and a configuration register value in the computing resource; and when configuring the configuration parameter of the computing resource in the computing resource, the configuration module 802 is specifically configured to write the configuration register value to a configuration register corresponding to the configuration register address.

In a possible implementation, the running characteristic includes at least any one or more of the following: a quantity of instructions executed by a processor core in each clock cycle, a loss rate of an instruction translation lookaside buffer, a cache loss rate, and a prefetch hit rate.

Division into modules in this embodiment of this application is an example, is only logical function division, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

If the integrated module is implemented in the form of the software functional module and is sold or used as an independent product, the integrated module may be stored in a computer-readable storage medium. Based on such an understanding, the technical solutions of this application essentially, or the part contributing to the conventional technology, or all or a part of the technical solutions may be embodied in a form of a software product. The computer software product is stored in a storage medium, and includes several instructions for instructing a terminal device (which may be a personal computer, a mobile phone, a network device, or the like) or a processor (processor) to perform all or some steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The descriptions of procedures corresponding to the foregoing accompanying drawings have respective focuses. For a part of a procedure that is not described in detail, refer to related descriptions of another procedure.

All or some of the foregoing embodiments may be implemented by using software, hardware, firmware, or any combination thereof. When the software is used for implementation, two programs may be started in a computing resource. One is a program (denoted as a first program) for implementing the method in this application, and the other is a program (to be specific, the program in the foregoing method embodiments, denoted as a second program) run in the computing resource. The first program and the second program may alternately be run in the computing resource. For example, the first program is run in a first time slot, and the second program is run in a second time slot. The first time slot and the second time slot do not overlap. It may be understood that one of the programs may be run in the computing resource in one time slot. However, because the first program occupies few computing resources, in other words, the first time slot is far shorter than the second time slot, when the first program and the second program are alternately run in the computing resource, impact on a running effect of the second program may be ignored. In this way, the first program and the second program may be alternately run in the computing resource, so that the computing resource determines, through running the first program, a running characteristic of a subprogram that is run or is being run in a plurality of similar subprograms included in the second program, and then determines a configuration parameter of the computing resource based on the determined running characteristic, so that the second program can be run in the computing resource more efficiently.

Further, when the software is used for implementation, all or some of the embodiments may be implemented in a form of a computer program product. The computer program product includes computer program instructions. When the computer program instructions are loaded and executed on a computer, the procedures or functions in the related method embodiments in FIG. 3 to FIG. 6 according to embodiments of this application are generated.

The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium (for example, an SSD).

It may also be understood that the detection module 803 is configured to perform step 301 in FIG. 3 and steps in the related method embodiments in FIG. 4 to FIG. 6, the parameter determining module 801 is configured to perform step 302 and step 303 in FIG. 3, and the configuration module 802 is configured to perform step 304 in FIG. 3. Further, when the parameter determining module 801 and the detection module 803 are implemented by using the hardware, to be specific, when the parameter determining module 801 or the detection module 803 includes a hardware circuit, the detection module 803 may send a detection signal to the parameter determining module 801 each time after executing a conditional jump instruction if determining that a program is in a loop, or send a start signal to the parameter determining module 801 if determining that a program is not in a loop.

The implementation may be specifically any one of the following examples A to C.

In the example A, the detection module 803 sends a start signal and a detection signal to the parameter determining module 801. Correspondingly, the parameter determining module 801 resets a characteristic counter in a performance monitoring module (that is, clears a count) in response to the start signal; and the parameter determining module 801 determines a value of the characteristic counter in the performance monitoring module in response to the detection signal.

In an example B, the detection module 803 sends a start signal and a plurality of detection signals to the parameter determining module 801. Correspondingly, the parameter determining module 801 resets a characteristic counter in a performance monitoring module (that is, clears a count) in response to the start signal; the parameter determining module 801 determines a value of the characteristic counter in the performance monitoring module in response to the 1^{st} detection signal; and the parameter determining module 801 records a value of the characteristic counter in the performance monitoring module currently in response to each detection signal after the 1^{st} detection signal, and determines a difference between the current value of the characteristic counter in the performance monitoring module and a previously recorded value of the characteristic counter.

In addition, in the foregoing example A and example B, the parameter determining module 801 may further determine the value of the characteristic counter in the performance monitoring module in response to the start signal (that is, not reset the characteristic counter in the performance monitoring module), so that when the parameter determining module 801 receives the 1^{st} detection signal, the parameter determining module 801 determines the difference between the value of the characteristic counter in the performance monitoring module and the previous value of the characteristic counter in response to the detection signal.

In the example C, the detection module 803 sends a plurality of detection signals to the parameter determining module 801 (that is, does not send a start signal). Correspondingly, the parameter determining module 801 determines a value of a characteristic counter in a performance monitoring module in response to the 1^{st} detection signal, and the parameter determining module 801 records a current value of the characteristic counter in the performance monitoring module in response to each detection signal after the 1^{st} detection signal, and determines a difference between the current value of the characteristic counter in the performance monitoring module and a previously recorded value of the characteristic counter.

The following provides two examples in an actual application with reference to the example A. Example 1: A characteristic counter in the performance monitoring module is configured to determine a cache loss rate. After receiving the start signal, the parameter determining module 801 resets the characteristic counter. After receiving the detection signal, the parameter determining module 801 determines a value of the characteristic counter, to determine the cache loss rate based on a count of the characteristic counter between the start signal and the detection signal. Example 2: A characteristic counter in the performance monitoring module is configured to determine a prefetch hit rate. After receiving the start signal, the parameter determining module 801 resets the characteristic counter. After receiving the detection signal, the parameter determining module 801 determines a value of the characteristic counter, to determine the prefetch hit rate based on a count of the characteristic counter between the start signal and the detection signal.

It may be understood that the start signal and the detection signal represent only an action triggering mechanism. For example, the start signal is a pulse on a signal line between the detection module 803 and the parameter determining module 801, and the detection signal is another pulse on the signal line between the detection module 803 and the parameter determining module 801. For another example, the start signal and the detection signal are level changes. For example, the start signal is a level change from 0 to one, and the detection signal is a level change from one to 0.

Further, with reference to FIG. 5 and the example B, for example, when detecting the conditional jump instruction for the 1^{st} time, the detection module 803 sends the start signal to the parameter determining module 801, and when detecting the conditional jump instruction for the 2^{nd} time, sends the detection signal to the parameter determining module 801. In this way, the parameter determining module 801 determines a count value between the 1^{st} and 2^{nd} conditional jump instructions, where the count value may indicate a running characteristic of the program in a loop. In addition, it may be further understood that, when detecting the conditional jump instruction for an m^{th} time (where m is greater than 2), the detection module 803 further sends the detection signal to the parameter determining module 801. Correspondingly, the parameter determining module 801 determines a count value between an (m-1)^{th} conditional jump instruction and an m^{th} conditional jump instruction, to determine a running characteristic of the program in a loop between the (m-1)^{th} conditional jump instruction and the m^{th} conditional jump instruction.

With reference to FIG. 6 and the example B, for example, when detecting the conditional jump instruction for the 2^{nd} time, the detection module 803 sends the start signal to the parameter determining module 801, and when detecting the conditional jump instruction for the 3^{rd} time, sends the detection signal to the parameter determining module 801. In this way, the detection module 803 can not only determine a count value between the two conditional jump instructions, but also improve accuracy of loop detection. In addition, it may be further understood that, in FIG. 6, when detecting the conditional jump instruction for an m^{th} time (where m is greater than 3), the detection module 803 further sends the detection signal to the parameter determining module 801. Correspondingly, the parameter determining module 801 determines a count value between an (m-1)^{th} conditional jump instruction and an m^{th} conditional jump instruction, to determine a running characteristic of the program in a loop between the (m-1)^{th} conditional jump instruction and the m^{th} conditional jump instruction.

In addition, in the foregoing example B, there may further be one or more of the following plurality of manners. Manner 1: After detecting a plurality of conditional jump instructions, the detection module 803 sends the start signal to the parameter determining module 801. Manner 2: After sending the start signal to the parameter determining module 801, the detection module 803 may further send a detection signal to the parameter determining module 801 each time after detecting a plurality of conditional jump instructions, where quantities of times that the conditional jump instruction is executed may be the same or different between every two times of sending the detection signal. The example A and the example C are similar to the example B.

With reference to FIG. 5 and the example A, for example, when detecting the conditional jump instruction for the 1^{st} time, the detection module 803 sends the start signal to the parameter determining module 801, and when detecting the conditional jump instruction for the 3^{rd} time, sends the detection signal to the parameter determining module 801. In this way, the parameter determining module 801 determines a count value between the 1^{st} and 3^{rd} conditional jump instructions, where the count value may indicate a running characteristic of the program in two loops.

With reference to FIG. 6 and the example A, for example, when detecting the conditional jump instruction for the 2^{nd} time, the detection module 803 sends the start signal to the parameter determining module 801, and when detecting the conditional jump instruction for the 5^{th} time, sends the detection signal to the parameter determining module 801. In this way, the parameter determining module 801 determines a count value between the 2^{nd} and 5^{th} conditional jump instructions, where the count value may indicate a running characteristic of the program in two loops.

Based on the foregoing content and a same concept, this application provides a processing device. The processing device includes a computing resource and a storage device connected to the computing resource. The storage device is configured to store a computer program, and the computing resource is used to execute the computer program stored in the storage device, so that the computing resource implements the method in the foregoing method embodiments. Specifically, the processing device includes one or more processors, and the processor includes one or more processor cores. The processor core can implement the method in the foregoing method embodiments when reading the computer program stored in the storage device.

Based on the foregoing content and a same concept, this application provides a computer-readable storage medium. The computer-readable storage medium stores a computer program or instructions, and the computer program or the instructions are run in a computing resource in a processing device, to perform the method in the foregoing method embodiments.

Based on the foregoing content and a same concept, this application provides a processing chip, including at least one processor core and an interface. The interface is used for providing program instructions or data for at least one processor core. The at least one processor core is configured to execute the program instructions, to implement the method in the foregoing method embodiments.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for running a program, comprising:
when determining that a program that is being run in a computing resource in a processing device comprises a plurality of similar subprograms, obtaining a running characteristic of a subprogram that is run or is run currently in the plurality of similar subprograms, wherein the plurality of similar subprograms are a plurality of subprograms whose similarity of running characteristics is greater than or equal to a first preset value;
determining a configuration parameter of the computing resource based on the running characteristic; and
configuring the computing resource by using the configuration parameter of the computing resource.

2. The method according to claim 1, wherein the plurality of similar subprograms are a loop program that is in the program and that is executed by the computing resource for a plurality of times, and each subprogram corresponds to one loop of the loop program.

3. The method according to claim 2, wherein a quantity of instructions of the loop program is greater than a second preset value.

4. The method according to claim 2, wherein the determining that a program that is being run in a computing resource in a processing device comprises a plurality of similar subprograms comprises:
when a quantity of times that a first subprogram in the program is repeatedly executed by the computing resource is greater than a third preset value, determining the first subprogram as the loop program.

5. The method according to claim 4, wherein before the determining the first subprogram as the loop program, the method further comprises:
after the first subprogram is executed, if a conditional jump instruction is executed, determining whether record information of the conditional jump instruction exists; and
if the record information exists, determining, based on the record information, whether the quantity of times that the first subprogram is repeatedly executed is greater than the third preset value; or
if the record information does not exist, adding the record information.

6. The method according to claim 5, wherein the determining, based on the record information, whether the quantity of times that the first subprogram is repeatedly executed is greater than the third preset value comprises:
updating a quantity of times of executing the conditional jump instruction in the record information; and
determining, based on an updated quantity of times of executing the conditional jump instruction in the record information, whether the quantity of times that the first subprogram is repeatedly executed is greater than the third preset value.

7. The method according to claim 5, wherein the determining, based on the record information, whether the quantity of times that the first subprogram is repeatedly executed is greater than the third preset value comprises:
determining a first quantity of instructions, wherein the first quantity of instructions is an accumulative quantity of instructions executed by the program during execution of the conditional jump instruction; and
determining, based on a quantity of instructions and an execution length in the record information and the first quantity of instructions, whether the quantity of times that the first subprogram is repeatedly executed is greater than the third preset value, wherein
the quantity of instructions in the record information indicates an accumulative quantity of instructions executed by the program during last execution of the conditional jump instruction; and
the execution length in the record information is a difference between accumulative quantities of instructions executed by the program during first two times of execution of the conditional jump instruction respectively.

8. The method according to claim 7, wherein the third preset value is equal to 2; and
the determining, based on a quantity of instructions and an execution length in the record information and the first quantity of instructions, whether the quantity of times that the first subprogram is repeatedly executed is greater than the third preset value comprises:
using a difference between the first quantity of instructions and the quantity of instructions in the record information as a first execution length; and
when a difference between the first execution length and the execution length in the record information is less than a difference threshold, determining that the quantity of times that the first subprogram is repeatedly executed is greater than 2.

9. The method according to claim 7, wherein after the determining the first subprogram as the loop program, the method further comprises:
updating the quantity of instructions in the record information based on the first quantity of instructions;
determining an instruction quantity threshold based on an updated first quantity of instructions and a preset execution length in the record information;
when the quantity of instructions executed by the program reaches the instruction quantity threshold, if the conditional jump instruction is not executed again, determining that the loop program has exited; and
determining the configuration parameter of the computing resource as a default configuration parameter.

10. The method according to claim 5, wherein the record information is recorded in a preset cache of the computing resource.

11. The method according to claim 1, wherein the determining a configuration parameter of the computing resource based on the running characteristic comprises:
determining, from a plurality of preset characteristics based on the running characteristic, a target preset characteristic that matches the running characteristic; and
determining, as the configuration parameter of the computing resource, a preset configuration parameter corresponding to the target preset characteristic.

12. The method according to any one of claims 1 to 11, wherein the running characteristic comprises at least any one or more of the following: a quantity of instructions executed by a processor core in each clock cycle, a loss rate of an instruction translation lookaside buffer, a cache loss rate, and a prefetch hit rate.

13. An apparatus for running a program, comprising:
a parameter determining module, configured to: when determining that a program that is being run in a computing resource in a processing device comprises a plurality of similar subprograms, obtain a running characteristic of a subprogram that is run or is run currently in the plurality of similar subprograms, wherein the plurality of similar subprograms are a plurality of subprograms whose similarity of running characteristics is greater than or equal to a first preset value; and determine a configuration parameter of the computing resource based on the running characteristic; and
a configuration module, configured to configure the computing resource by using the configuration parameter of the computing resource.

14. The apparatus according to claim 13, wherein the plurality of similar subprograms are a loop program that is in the program and that is executed by the computing resource for a plurality of times, and each subprogram corresponds to one loop of the loop program.

15. The apparatus according to claim 14, wherein a quantity of instructions of the loop program is greater than a second preset value.

16. The apparatus according to claim 14, further comprising: a detection module, wherein
the detection module is configured to: when a quantity of times that a first subprogram in the program is repeatedly executed by the computing resource is greater than a third preset value, determine the first subprogram as the loop program.

17. The apparatus according to claim 16, wherein before determining the first subprogram as the loop program, the detection module is further configured to:
after the first subprogram is executed, if a conditional jump instruction is executed, determine whether record information of the conditional jump instruction exists; and
if the record information exists, determine, based on the record information, whether the quantity of times that the first subprogram is repeatedly executed is greater than the third preset value; or
if the record information does not exist, add the record information.

18. The apparatus according to claim 17, wherein when determining, based on the record information, whether the quantity of times that the first subprogram is repeatedly executed is greater than the third preset value, the detection module is specifically configured to:
update a quantity of times of executing the conditional jump instruction in the record information; and
determine, based on an updated quantity of times of executing the conditional jump instruction in the record information, whether the quantity of times that the first subprogram is repeatedly executed is greater than the third preset value.

19. The apparatus according to claim 18, wherein when determining, based on the record information, whether the quantity of times that the first subprogram is repeatedly executed is greater than the third preset value, the detection module is specifically configured to:
determine a first quantity of instructions, wherein the first quantity of instructions is an accumulative quantity of instructions executed by the program during execution of the conditional jump instruction; and
determine, based on a quantity of instructions and an execution length in the record information and the first quantity of instructions, whether the quantity of times that the first subprogram is repeatedly executed is greater than the third preset value, wherein
the quantity of instructions in the record information indicates an accumulative quantity of instructions executed by the program during last execution of the conditional jump instruction; and
the execution length in the record information is a difference between accumulative quantities of instructions executed by the program during first two times of execution of the conditional jump instruction respectively.

20. The apparatus according to claim 19, wherein the third preset value is equal to 2; and
when determining, based on the quantity of instructions and the execution length in the record information and the first quantity of instructions, whether the quantity of times that the first subprogram is repeatedly executed is greater than the third preset value, the detection module is specifically configured to:
use a difference between the first quantity of instructions and the quantity of instructions in the record information as a first execution length; and
when a difference between the first execution length and the execution length in the record information is less than a difference threshold, determine that the quantity of times that the first subprogram is repeatedly executed is greater than 2.

21. The apparatus according to claim 19, wherein
after determining the first subprogram as the loop program, the detection module is further configured to:
update the quantity of instructions in the record information based on the first quantity of instructions;
determine an instruction quantity threshold based on an updated first quantity of instructions and a preset execution length in the record information; and
when the quantity of instructions executed by the program reaches the instruction quantity threshold, if the conditional jump instruction is not executed again, determine that the loop program has exited; and
the parameter determining module is further configured to:
determine the configuration parameter of the computing resource as a default configuration parameter.

22. The apparatus according to claim 17, wherein the record information is recorded in a preset cache of the computing resource.

23. The apparatus according to claim 13, wherein when determining the configuration parameter of the computing resource based on the running characteristic, the parameter determining module is specifically configured to:
determine, from a plurality of preset characteristics based on the running characteristic, a target preset characteristic that matches the running characteristic; and
determine, as the configuration parameter of the computing resource, a preset configuration parameter corresponding to the target preset characteristic.

24. The apparatus according to any one of claims 13 to 23, wherein the running characteristic comprises at least any one or more of the following: a quantity of instructions executed by a processor core in each clock cycle, a loss rate of an instruction translation lookaside buffer, a cache loss rate, and a prefetch hit rate.

25. A processing device, comprising a computing resource and a storage device connected to the computing resource, wherein the storage device is configured to store a computer program, and the computing resource is for executing the computer program stored in the storage device, to enable the computing resource to perform the method according to any one of claims 1 to 12.

26. A computer-readable storage medium, wherein the computer-readable storage medium stores a computer program or instructions, and the computer program or the instructions are run in a computing resource in a processing device, to perform the method according to any one of claims 1 to 12.

27. A processing chip, comprising at least one processor core and an interface, wherein
the interface is used for providing program instructions or data for the at least one processor core; and
the at least one processor core is configured to execute the program instructions, to implement the method performed by the computing resource according to any one of claims 1 to 12.
